Europäisches Patentamt

European Patent Office

Office européen des brevets

(19)

(11) **EP 1 007 378 B1**

(12) **FASCICULE DE BREVET EUROPEEN**

(45) Date de publication et mention
de la délivrance du brevet:
**02.10.2002 Bulletin 2002/40**

(51) Int Cl.⁷: **B60C 11/04**, B60C 11/00,
B60C 11/13, B60C 11/12,
B29D 30/06

(21) Numéro de dépôt: **98906920.8**

(22) Date de dépôt: **05.02.1998**

(86) Numéro de dépôt international:
**PCT/EP98/00625**

(87) Numéro de publication internationale:
**WO 98/035842 (20.08.1998 Gazette 1998/33)**

(54) **SCULPTURE DE BANDE DE ROULEMENT ET PROCEDE DE FABRICATION**

REIFENPROFIL UND VERFAHREN ZU DESSEN HERSTELLUNG

TREAD PATTERN AND METHOD FOR MAKING SAME

(84) Etats contractants désignés:
**AT BE CH DE DK ES FI FR GB GR IE IT LI LU MC
NL PT SE**

(30) Priorité: **12.02.1997 FR 9701846**

(43) Date de publication de la demande:
**14.06.2000 Bulletin 2000/24**

(73) Titulaire: **Compagnie Générale des
Etablissements MICHELIN-MICHELIN & CIE
63040 Clermont-Ferrand Cedex 09 (FR)**

(72) Inventeurs:
• **GARNIER DE LABAREYRE, Bertrand
F-63040 Chamalières (FR)**

• **MERINO LOPEZ, Jose
F-63200 Riom (FR)**

(74) Mandataire: **Diernaz, Christian et al
Michelin & Cie,
Service SGD/LG/PI-LADOUX
63040 Clermont-Ferrand Cedex 09 (FR)**

(56) Documents cités:
EP-A- 0 342 908          EP-A- 0 367 557
DE-A- 4 403 662          GB-A- 2 061 837
US-A- 2 661 041

EP 1 007 378 B1

## Description

L'invention concerne les bandes de roulement destinées à la fabrication de pneumatiques neufs ou au rechapage de pneumatiques, et en particulier les sculptures pour lesdites bandes comportant un grand nombre de découpures se présentant sous la forme de rainures et/ou d'incisions. Elle concerne aussi un procédé de fabrication permettant de réaliser de telles bandes.

Pour adapter la performance des pneumatiques aux performances sans cesse améliorées des nouveaux véhicules, il devient, entre autre, nécessaire d'augmenter le niveau de la performance d'adhérence des pneumatiques sur route mouillée sans pour autant dégrader leurs autres performances. Par adhérence, on entend aussi bien les caractéristiques d'adhérence du pneumatique dans la direction transversale au déplacement du véhicule (tenue en virage) que celles du pneumatique dans la direction longitudinale au déplacement du véhicule (possibilité de transmettre au sol un effort freineur ou moteur).

Afin d'augmenter le potentiel d'adhérence d'une bande de roulement d'un pneumatique roulant sur une route revêtue d'eau, il est connu de pourvoir cette bande d'une sculpture formée d'une pluralité de découpures réalisées plus ou moins profondément dans ladite bande, lesdites découpures débouchant sur la surface de ladite bande en contact avec la route (cette surface est dite surface de roulement).

Par découpure, on entend tout évidement réalisé dans la bande de roulement que ce soit par enlèvement de matière une fois la bande vulcanisée ou que ce soit par moulage dans un moule pour mouler ladite bande et comportant des éléments de moulage faisant saillie sur la surface de moulage dudit moule, chaque élément de moulage ayant une géométrie identique à la géométrie de la découpure souhaitée. En règle générale, une découpure réalisée dans une bande de roulement est délimitée par au moins deux parois de gomme se faisant face, lesdites parois étant séparées d'une distance moyenne représentant la largeur de la découpure, l'intersection desdites parois avec la surface de roulement formant des arêtes de gomme. On distingue plusieurs types de découpures, par exemple :

- des rainures ou sillons caractérisés par une largeur supérieure à environ **10%** de l'épaisseur de la bande de roulement;

- des incisions de largeur relativement faible comparée à l'épaisseur de la bande de roulement; sous certaines conditions de sollicitation, ces incisions peuvent se fermer, au moins partiellement, dans le contact avec la route; les parois en vis-à-vis viennent en contact l'une contre l'autre au moins sur une partie plus ou moins grande des surfaces desdites parois (les arêtes formées par une incision sur la surface de roulement sont en contact ce qui entraîne la fermeture de l'incision).

Certaines découpures peuvent déboucher dans au moins une autre découpure. La trace d'une découpure sur la surface de roulement d'une bande de roulement suit un profil géométrique moyen déterminé comme le profil géométrique situé à une distance moyenne des arêtes formées par les parois de ladite découpure sur la surface de roulement. L'axe moyen de la trace d'une découpure sur la surface de roulement correspond à la droite des moindres carrés des distances des points du profil moyen de la trace de ladite découpure. En outre, il est usuel de définir le taux d'entaillement d'une sculpture comme le rapport suivant : aire des découpures sur la surface de roulement divisée par l'aire totale de contact entre le pneumatique et la route.

En réalisant une pluralité de découpures débouchant sur la surface de roulement, on crée une pluralité d'arêtes de gomme pour couper la couche d'eau éventuellement présente sur la route, de manière à maintenir le pneumatique en contact avec le sol et à créer des cavités formant des canaux destinées à recueillir et à évacuer l'eau présente dans la zone de contact du pneumatique avec la route dès lors qu'elles sont disposées de façon à déboucher en dehors de la zone de contact.

On trouve un exemple d'une telle sculpture dans le brevet US **1,452,099** qui décrit une bande de roulement pourvue d'une pluralité d'incisions d'orientation transversale régulièrement espacées.

Toutefois, l'augmentation du nombre de découpures conduit rapidement à une diminution sensible de la rigidité de la bande de roulement, ce qui a une incidence défavorable sur les performances du pneumatique voire même sur l'adhérence. Par rigidité de la bande de roulement, on entend la rigidité de la bande sous les actions combinées d'efforts de compression et d'efforts de cisaillement dans la région affectée par le contact avec la route. Conjointement, la présence de nombreuses découpures formant des canaux d'évacuation de l'eau induit un niveau de bruit en roulage sur route sèche qui est aujourd'hui considéré comme une nuisance que l'on désire réduire le plus possible tout particulièrement sur les véhicules de conception récente. Ce bruit en roulage est amplifié par les mouvements cycliques de fermeture et d'ouverture des découpures associés au frottement des parois desdites découpures lorsqu'elles sont fermées.

Dans le brevet **FR 1 028 978,** il est proposé une solution à ce problème consistant à pourvoir la bande de roulement d'une pluralité d'incisions circonférentielles de faible profondeur sur la surface de roulement de la bande neuve de façon à augmenter la souplesse de ladite bande uniquement au voisinage de la surface de roulement.

Cependant, le pneumatique étant destiné, une fois monté sur un véhicule, à assurer une bonne performance pendant toute la durée de vie dudit pneumatique (c'est à dire jusqu'à usure de sa bande de roulement correspondant au moins au niveau légal admis) il est nécessaire de prévoir une bande de roulement dont la sculpture assure la pérennité de la performance d'adhérence sur sol mouillé.

Le document EP-A-0 342 908, qui est un document de l'état de la technique antérieur pertinent, décrit une bande de roulement dont les caractéristiques correspondent à celles du préambule de la revendication 1.

L'objet de la présente invention est d'élaborer une bande de roulement pour pneumatique qui concilie à la fois un très bon niveau d'adhérence sur route mouillée et sur route sèche avec une faible émission de bruit en roulage à l'état neuf et pendant au moins une grande partie de la durée de vie de ladite bande. De façon complémentaire, l'un des objectifs de l'invention est de maîtriser l'évolution des performances avec l'usure de la bande de roulement.

Selon l'invention, il est proposé une bande de roulement d'épaisseur $E$ en mélange de caoutchouc, destinée à être placée radialement à l'extérieur d'un pneumatique, ladite bande étant pourvue d'une surface de roulement destinée à venir en contact avec la route pendant le roulage du pneumatique. La bande de roulement est pourvue d'un grand nombre de découpures de façon qu'une pluralité de découpures soient affectées par la zone de contact du pneumatique avec la route, Chaque découpure est définie par l'espace délimité principalement entre deux parois en regard l'une de l'autre, lesdites parois étant perpendiculaires à ou obliques par rapport à la surface de roulement, et chaque découpure a une profondeur au plus égale à l'épaisseur $E$ de la bande de roulement, la profondeur de ladite découpure étant mesurée comme la distance, suivant une direction radiale, des points du contour de ladite découpure les plus éloignés de la surface de roulement du pneumatique neuf par rapport à ladite surface. En outre, deux parois principales d'au moins une découpure située dans la partie de la bande de roulement affectée par l'écrasement au sol du pneumatique en roulage sont reliées par au moins un élément de liaison en gomme.

On note $S_E$ la surface totale de liaison sur chacune des parois de ladite découpure égale soit à la surface totale d'intersection de l'élément de liaison dans le cas d'un élément unique soit à la somme des surfaces d'intersection de tous les éléments de liaison dans le cas de plusieurs éléments et $S_T$ la surface totale de chacune des parois principales de ladite découpure.

La bande de roulement selon l'invention est caractérisée en ce que :

- les deux parois principales d'au moins une découpure située dans la partie de la bande de roulement affectée par l'écrasement au sol du pneumatique en roulage sont reliées par au moins un élément de liaison en gomme, le (les) élément(s) de liaison présentant avec chacune des parois une surface de liaison $S_E$ correspondant à la somme des surfaces d'intersection de chaque élément de liaison, ladite surface $S_E$ sur chacune des parois étant au moins égale à **10%** de la surface $S_T$ de ladite paroi,

- tous les points du contour extérieur de la surface d'intersection d'au moins un élément de liaison avec l'une des parois sont situés à une distance de la surface de roulement strictement inférieure à la profondeur de la découpure,

- et en ce que, sur chacune des parois principales, la surface de liaison $S_E$ est au plus égale à **80%** de la surface $S_G$, la surface $S_G$ étant égale à la surface, mesurée sur ladite paroi de la découpure, délimitée par le contour géométrique $L$ de longueur minimum tracé sur ladite paroi et enveloppant la surface de liaison $S_E$.

Pour une paroi, le contour géométrique $L$ de longueur minimum et enveloppant la surface totale de liaison $S_E$ sur cette paroi, correspond au contour qui peut être tracé sur ladite paroi de façon à envelopper l'ensemble de la surface totale de liaison formée par les surfaces d'intersection de tous les éléments de liaison avec ladite paroi. Une découpure étant définie comme l'espace continu délimité par au moins deux parois principales en regard l'une de l'autre, la présence d'au moins un élément de liaison entre lesdites parois, selon l'invention, ne rompt pas la continuité de cet espace et ceci quel que soit le niveau d'usure de la bande de roulement comportant une telle découpure.

Avantageusement, l'effet sur la performance en adhérence et en bruit est d'autant plus significatif qu'un plus grand nombre de découpures formant la sculpture d'une bande de roulement pour pneumatique sont pourvues d'au moins un élément de liaison de gomme de manière à obtenir à la fois une performance remarquable en adhérence sans pour autant dégrader le niveau de performance en bruit de roulage.

De manière avantageuse, et pour obtenir un effet de liaison optimum entre les parois des découpures et une longueur d'arêtes de gomme suffisante, chaque surface $S_G$ délimitée par le contour géométrique $L$ de longueur minimum et enveloppant la surface totale de liaison $S_E$ sur une paroi principale d'une découpure est au moins égale à **15%** de la surface de la paroi $S_T$ correspondante. Préférentiellement, la surface totale de liaison $S_E$ sur au moins une paroi principale d'au moins une découpure est au plus égale à **80%** de la surface de la paroi $S_T$ correspondante, de manière à conserver un volume de découpure conférant à la bande de roulement des caractéristiques d'adhérence suffisantes.

La bande de roulement conforme à l'invention présente plusieurs avantages :

- pour les découpures orientées essentiellement transversalement par rapport à la direction longitudinale de la bande, les impacts des arêtes de gomme sur la route sont réduits ce qui se traduit par une atténuation sensible du bruit émis en roulage et cela malgré une quantité d'arêtes relativement importante;

- en sortie d'aire de contact, la présence de éléments de liaison entre les parois des incisions orientées transversalement et éventuellement entre les faces opposées des éléments de relief limite les mouvements d'oscillation des éléments de gomme de la sculpture sortant de ladite aire qui provoquent des vibrations génératrices de bruit, réduisant ainsi le bruit résultant de ces vibrations;

- la réduction de la composante bruit résulte aussi de la diminution du frottement des parois des incisions l'une sur l'autre au passage dans le contact; les éléments de liaison empêchant à la fois le rapprochement des parois et le mouvement relatif de l'une par rapport à l'autre;

- un gain très marqué en adhérence tout en conservant une grande surface de gomme à user dans le cas d'une pluralité d'incisions de largeur faible, lesdites incisions étant pourvues d'au moins un élément de liaison.

Globalement, les sources de bruit associées à une telle sculpture sont beaucoup moins énergétiques du fait de la réduction de mouvement des parois des découpures résultant de la présence des éléments de liaison entre lesdites parois comparativement à une sculpture qui comporterait les mêmes découpures sans aucun élément de liaison.

Il va de soi qu'une sculpture selon l'invention peut combiner à la fois une pluralité de découpures pourvues d'au moins un élément de liaison avec une pluralité de découpures dépourvues d'élément de liaison, la proportion entre lesdites découpures pouvant être par exemple fonction du type de pneumatique comportant ladite sculpture.

La demanderesse a obtenu de manière surprenante de très bons résultats en roulage avec des pneumatiques pourvus d'une bande de roulement d'épaisseur **E,** pourvue d'une pluralité de découpures orientées quasiment dans la même direction, chacune desdites découpures étant définie par l'espace délimité principalement entre deux parois en regard l'une de l'autre, lesdites parois étant perpendiculaires à ou obliques par rapport à la surface de roulement, et lesdites découpures ayant une profondeur **h**.

Par profondeur **h** d'une découpure, on entend la distance radiale maximale mesurée entre l'arête de la découpure la plus proche de la surface de roulement de la bande de roulement à l'état neuf et le/les point(s) des parois de la découpure le/les plus éloigné(s) radialement de ladite surface de roulement. Cette profondeur **h** représente la distance radiale maximale existant entre les points les plus éloignés radialement des parois d'une découpure et est au plus égale à l'épaisseur **E** de la bande de roulement.

En outre, la bande de roulement selon une variante de l'invention est telle que :

- les deux parois principales desdites découpures sont reliées par au moins un élément de liaison en gomme;
- le taux de liaison $T_P = S_E/S_T$, $S_E$ pour chaque découpure est au moins égal à **0,10** et au plus égal à **0,80,** $S_E$ étant égale à la surface totale d'intersection du/ des élément(s) de liaison sur chacune des parois, $S_T$ représentant la surface totale de chaque paroi principale de ladite découpure;
- le rapport **p/h,** entre le pas moyen **p** séparant chacune desdites découpures et leur profondeur **h,** est au moins égal à **0,2** et au plus égal à **1,9.**

Pour éviter l'apparition d'usure irrégulière de la bande de roulement et si on se fixe une valeur du taux de liaison $T_P$ des découpures, alors il est préférable de choisir le pas **p** de manière à ce que le rapport **p/h** vérifie, à l'état neuf, l'inégalité suivante :

$$\frac{p}{h} \le \frac{1}{5}\left(\frac{1}{Tp}\right)^{0.75}$$

De façon complémentaire, et pour atteindre une bonne performance en adhérence, il est judicieux de choisir le pas **p** de manière à que le rapport **p/h** vérifie l'inégalité suivante :

$$\frac{p}{h} \le 2\,(1\text{-}Tp)^{0.5}$$

Il est également possible de tenir compte la largeur moyenne **e** des découpures (c'est-à-dire la distance moyenne séparant les parois principales desdites découpures) disposées régulièrement suivant un pas **p** sur une bande de roulement de manière à obtenir le taux de liaison **Tp** permettant d'atteindre de bons résultats en roulage. La demanderesse a trouvé que des bons résultats en adhérence et en usure sont obtenus lorsque le taux de liaison **Tp** est au moins égal à **0,10** et est au plus égal à la valeur suivante :

$$\frac{1}{\left(1+\frac{1}{3}\varepsilon\right)^{0,75}} \qquad \text{avec } \varepsilon = (p\text{-}e)/h$$

Dès que le taux de liaison $T_P$ est inférieur à environ **0,10,** l'objectif ne peut être atteint car les éléments de liaison n'apportent pas suffisamment de rigidité et ne peuvent pas bloquer suffisamment les mouvements des parois de la découpure auxquelles ils sont liés; préférentiellement, le taux de liaison $T_P$ est supérieur à **0,25.**

À l'opposé, quand ce taux dépasse la valeur limite proposée, la rigidité devient trop importante et la longueur d'arête active est trop réduite pour maintenir une performance satisfaisante en adhérence. Par longueur d'arête active d'une bande de roulement d'un pneumatique, on entend la somme des longueurs de toutes les arêtes de gomme en contact avec la route dans l'empreinte et pour un niveau d'usure de la bande de roulement donné.

En outre, et afin de conserver une performance suffisamment constante avec l'usure de la bande de roulement, il est judicieux de prévoir que la valeur du taux de liaison $T_P=S_P/S_T$, évalué pour différents niveaux d'usure de la bande de roulement diminue de façon sensiblement régulière avec l'usure du pneumatique, au moins à partir d'un niveau d'usure partiel prédéterminé, $S_P$ représentant, sur une des parois de ladite découpure, la surface de liaison restante après usure partielle de la bande de roulement et $S_T$ représentant la surface totale restante de ladite paroi correspondant au même niveau d'usure partielle de la bande de roulement. De cette façon, l'effet des éléments de liaison sur la rigidité est maximum quand la bande de roulement est neuve mais décroît progressivement avec l'augmentation de la rigidité de ladite bande résultant de l'usure.

D'autre part, des essais de roulage de pneumatiques ont permis de constater que la sculpture selon l'invention conduit à :

- une amélioration de l'usure par la réduction des glissements de la gomme contre la route que ce soit au moment de la sortie de la zone de contact pour les découpures transversales ou que ce soit en régime de virage pour les découpures orientées circonférentiellement;

- une amélioration de la résistance à la fatigue du fond des découpures (c'est à dire de la partie des découpures qui se trouve radialement le plus à l'intérieur de la bande de roulement);

- une moindre rétention de cailloux dans les découpures pourvues d'éléments de liaison.

On observe, en outre, que le pouvoir drainant de la sculpture selon l'invention, c'est à dire sa capacité à évacuer l'eau présente sur la route, est suffisant et cela quel que soit le niveau d'usure de la bande de roulement, ce qui représente un avantage particulièrement intéressant pour l'utilisateur.

Afin d'obtenir une efficacité durable avec le temps en roulage sur une route mouillée d'une sculpture selon l'invention, la longueur d'arête active de la sculpture dans l'empreinte correspondant à chaque niveau d'usure, est définie préférentiellement comme étant au moins égale à **50%** de la longueur d'arête active sur la surface de roulement de la bande de roulement à l'état neuf.

De façon à ce que la bande de roulement conserve une rigidité de cisaillement et de flexion suffisante lorsqu'elle est soumise aux efforts de contact et cela malgré la présence d'un très grand nombre de découpures, il est judicieux de disposer le/les élément(s) de liaison de chacune desdites découpures de manière à ce que la distance séparant l'arête la plus proche de la surface de roulement à l'état neuf et les points du contour de la surface d'intersection dudit élément sur ladite paroi soit au plus égale à **60%** de la hauteur **h** de la découpure et préférentiellement entre **40%** et **60%**.

Une autre amélioration sensible de la sculpture d'une bande de roulement selon l'invention consiste à réaliser une pluralité de découpures pourvues d'un nombre important d'éléments de liaison répartis de façon assez régulière dans chacune des découpures de façon à assurer une bonne régularité de l'effet induit sur la rigidité des éléments de gomme délimités par les parois de la découpure.

Une bande de roulement selon cette dernière amélioration comporte une pluralité de découpures, chaque découpure étant définie par l'espace délimité principalement entre deux parois en regard l'une de l'autre, lesdites parois étant perpendiculaires à ou obliques par rapport à la surface de roulement, et ayant une profondeur, mesurée comme la distance, suivant une direction radiale, des points du contour de ladite découpure les plus éloignés de la surface de roulement du pneumatique neuf, au plus égale à l'épaisseur **E** de la bande de roulement. La bande est caractérisée en ce que :

- les deux parois principales d'au moins une découpure située dans la partie de la bande de roulement affectée par l'écrasement au sol du pneumatique en roulage sont reliées par une pluralité d'éléments de liaison en gomme, lesdits éléments de liaison présentant avec chacune des parois une surface de liaison $S_E$, ladite surface de liaison $S_E$ sur chacune des parois étant au moins égale à **10%** de la surface $S_T$ de ladite paroi,

- chaque élément de liaison présentant avec chacune des parois une surface d'intersection $S_E$ au plus égale à **(ExE/20)**,

- et en ce que la surface $S_G$ délimitée par le contour géométrique **L** de longueur minimum et enveloppant toute la surface de liaison $S_E$ est au moins égale à **70%** de la surface $S_T$ de ladite paroi.

Cette bande de roulement confère au pneumatique des performances particulièrement homogènes et régulières quel que soit le degré d'usure de ladite bande.

Un autre objet de l'invention est de proposer un procédé de fabrication d'une bande de roulement pourvue d'une pluralité de découpures, lesdites découpures étant pourvues d'au moins un élément de liaison. Il ressort clairement que les procédés habituels de moulage des découpures ne sont pas adaptés pour réaliser de telles sculptures de façon aisée et avec une précision suffisante. En effet, le fait de disposer au moins un élément de liaison sous la surface de roulement de la bande de roulement conduit à une impossibilité de démoulage de ladite bande dès lors que l'on emploie un procédé de moulage habituel et mettant en oeuvre des lames métalliques pour mouler des incisions.

Un objectif de l'invention est de proposer un procédé d'obtention d'une bande pour pneumatique comportant au moins une découpure dont les parois principales sont reliées par au moins un élément de liaison en éliminant les problèmes de démoulage. Le procédé de fabrication d'une bande de roulement d'épaisseur **E** conforme à l'invention comporte les étapes suivantes :

- a) réalisation d'intercalaires dans un matériau approprié, lesdits intercalaires ayant la forme générale des découpures souhaitées dans la bande de roulement et d'épaisseur égale à la largeur desdites découpures;

- b) enlèvement de matière dans chaque intercalaire pour obtenir un/des orifice(s) selon une répartition choisie au préalable, chaque orifice ayant une forme équivalente à la forme d'un élément de liaison;

- c) insertion des intercalaires réalisés selon les étapes précédentes dans une bande de gomme;

- d) moulage sous pression dans un moule aux dimensions de la bande de roulement souhaitée, au cours duquel le mélange de gomme de la bande, devenu davantage fluide remplit les orifices des intercalaires de façon à former des éléments de liaison entre les parois de gomme adjacentes à chaque intercalaire;

- e) vulcanisation de ladite bande de gomme suivi du démoulage.

Bien entendu, cette bande de roulement peut être réalisée sous la forme d'une bande de longueur prédéterminée ou sous la forme d'un anneau fermé destiné à être placée radialement à l'extérieur de l'ébauche d'un pneumatique au cours de sa fabrication ou sur un pneumatique en cours de rechapage.

Une variante du procédé qui vient d'être décrit peut consister à réaliser les étapes a) à c) et à placer la bande de gomme non vulcanisée et non moulée sur une ébauche de pneumatique avant de procéder au moulage et à la vulcanisation de l'ensemble pneumatique et bande ainsi assemblés.

De façon plus générale, ce procédé, consistant à insérer des intercalaires dans une bande de gomme, peut aussi s'appliquer dans le cas de la fabrication d'une bande de roulement comportant une pluralité d'intercalaires sans orifice pour mouler une pluralité d'incisions ne comportant pas d'éléments de liaison.

De manière à faciliter l'insertion des intercalaires dans la bande de gomme, il est proposé une autre variante du procédé décrit et consistant à réaliser, dans une bande de gomme non vulcanisée, des découpures de dimensions sensiblement égales aux dimensions des découpures pourvues d'au moins un élément de liaison entre les parois desdites découpures.

La matière composant les intercalaires et remplissant les découpures pourvues d'au moins un élément de liaison est choisie de manière à pouvoir être éliminée au moins partiellement, c'est à dire au moins à proximité de la surface de roulement à l'état neuf, et progressivement pendant le roulage pour conserver en permanence une grande longueur d'arêtes.

La demanderesse a trouvé que la pâte à papier était un matériau de remplissage particulièrement adapté à cet usage, car ce matériau est caractérisé par une très faible cohésion dès lors qu'il est en présence d'eau pendant un laps de temps suffisant et présente donc l'intérêt de pouvoir s'éliminer progressivement pendant le roulage du pneumatique ou bien de pouvoir être éliminé après avoir été mis en présence d'eau et avant tout roulage et cela d'autant plus aisément que les découpures pourvues d'au moins un élément de liaison ont une épaisseur d'au moins **0,4** mm.

Une variante de ce procédé consiste à choisir comme matériau composant les intercalaires un matériau dont le point de fusion est suffisamment proche de la température de vulcanisation de ladite bande de façon à devenir fluide seulement vers la fin de la durée de ladite vulcanisation, compte tenu de la montée progressive en température de la gomme constituant ladite bande, de manière à permettre l'enlèvement dudit matériau de remplissage, par exemple par aspiration ou par soufflage après vulcanisation de ladite bande. Préférentiellement, le matériau de remplissage est un alliage ayant un bas point de fusion offrant l'avantage d'être rigide pendant la phase de mise en forme de la bande et pendant la phase de vulcanisation avant de devenir fluide à la fin de la vulcanisation de la bande de façon à permettre l'enlèvement dudit alliage et éventuellement de le recycler pour un usage similaire.

Le procédé qui vient d'être décrit peut aussi être suivi d'une opération de meulage affectant quasi uniquement la surface de la bande de roulement neuve et destinée à faire apparaître de façon très nette une pluralité d'arêtes sur la surface de roulement de ladite bande. Une autre façon d'obtenir un bon état de surface dès la sortie du moule, peut consister à disposer l'ensemble des découpures pourvues d'au moins un élément de liaison sous la surface de roulement de la bande de roulement et à mouler ladite bande dans un moule comportant une pluralité d'éléments de relief destinés à mouler une pluralité de découpures sur la surface de roulement et dont la profondeur est légèrement supérieure à la plus petite des distances séparant les découpures pourvues d'au moins un élément de liaison de la surface de roulement. De cette façon, la bande de roulement en s'usant va révéler progressivement une pluralité de découpures sous la surface de roulement de ladite bande neuve.

L'invention sera aisément comprise à l'aide des dessins annexés qui ne représentent que des modes particuliers de réalisation et qui ne sauraient être considérés comme limitatifs.

- la figure **1** est une coupe schématique d'une partie d'une bande de roulement suivant l'invention;

- la figure **2** est une coupe schématique de la bande de roulement de la figure **1** réalisée le long d'une paroi d'une découpure pourvue d'éléments de liaison;

- la figure **3** est une coupe schématique d'une bande de roulement réalisée le long d'une paroi d'une découpure pourvue d'un élément de liaison unique suivant l'invention;

- la figure **4** représente une bande de roulement d'un pneumatique comportant des incisions pourvues d'éléments de liaison, lesdites incisions étant orientées pour une part dans le sens circonférentiel et pour une autre part dans le sens transversal;

- la figure **5** représente la coupe suivant **XX** de la bande de roulement de la figure **4** montrant une découpure pourvue d'éléments de liaison inclinés par rapport à la surface de roulement de ladite bande;

- la figure **6** représente une variante de disposition des éléments de liaison d'une découpure;

- la figure **7** représente une coupe schématique d'une bande de roulement réalisé le long d'une paroi d'une découpure pourvue d'un grand nombre d'éléments de liaison;

- la figure **8** représente vue en coupe une variante d'une bande de roulement comportant une pluralité d'incisions pourvue d'une pluralité d'éléments de liaison sous la surface de roulement de ladite bande neuve;

- la figure **9** représente deux variantes **A** et **B** de sculptures de bande de roulement selon l'invention ayant fait l'objet de tests de roulage;

- la figure **10** représente un intercalaire employé pour la fabrication des variantes **A** et **B** de la figure **9;**

- la figure **11** représente schématiquement une variante d'une découpure dont les parois principales et les éléments de liaison sont en mélange de gomme de nature différente de la gomme composant la bande de roulement.

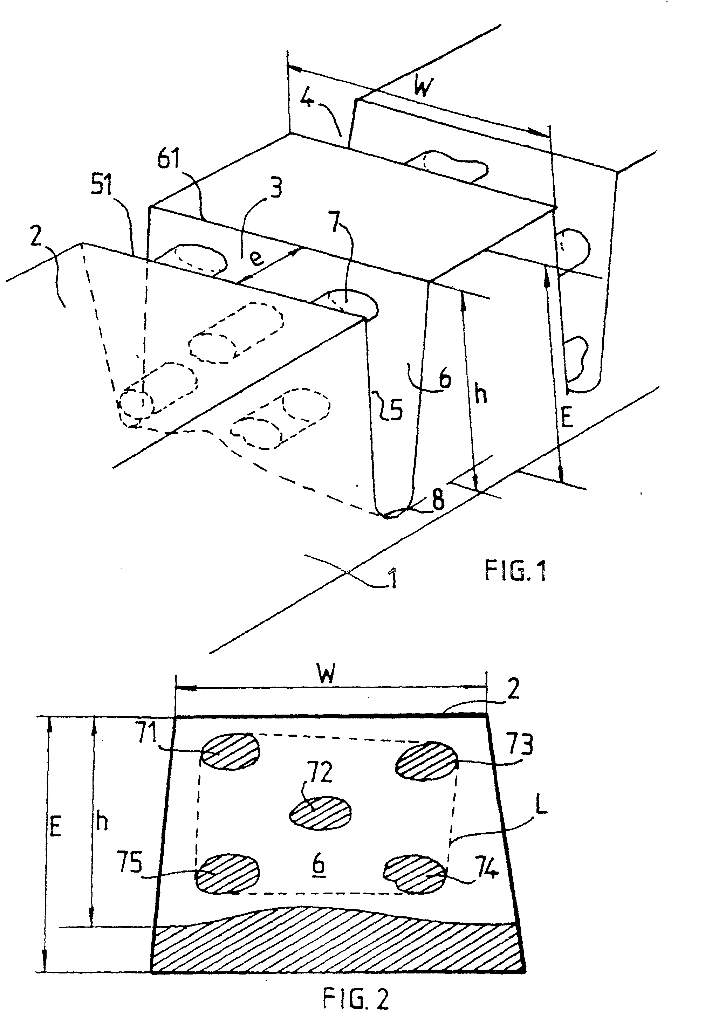

La bande de roulement **1** représentée partiellement dans le sens de sa longueur sur la figure **1** a une épaisseur **E** et une largeur **W.** Une des parois externes de ladite bande est destinée à constituer la surface de roulement **2** d'un pneumatique pourvu de ladite bande; ce pneumatique peut être soit un pneumatique neuf soit un pneumatique rénové c'est à dire un pneumatique ayant roulé jusqu'à usure de sa bande de roulement nécessitant alors la mise en place d'une nouvelle bande de roulement.

Une pluralité de découpures **3, 4** sont réalisées dans la bande **1** de façon à s'étendre sur toute la largeur **W** de ladite bande **1.** La découpure **3** est délimitée par deux parois principales planes **5, 6** perpendiculaires à la surface de roulement **2** et distantes l'une de l'autre d'une distance moyenne e égale à la largeur de la découpure **3.** Les deux parois **5, 6** délimitant la découpure **3** se raccordent aux points **8** radialement les plus à l'intérieur de la découpure par rapport à la surface de roulement **2.** L'intersection des parois **5, 6** avec la surface de roulement **2** détermine des arêtes de gomme respectivement **51** et **61** dont une fonction est de couper le film d'eau pouvant exister entre la bande et la route.

La découpure **3** est pourvue de cinq éléments de liaison en gomme **7** qui relient les parois **5** et **6** de ladite découpure, lesdits éléments de liaison permettant de maintenir à distance quasiment constante lesdites parois en évitant à la fois l'ouverture et la fermeture de la découpure **3.**

Sur la figure **2** est représentée une coupe transversale de la bande de roulement **1** de la figure **1** réalisée le long de la paroi **6** de la découpure **3.** On peut y voir, réparties assez uniformément sur la paroi **6,** les surfaces d'intersection **71, 72, 73, 74, 75** des éléments de liaison **7** avec la paroi **6,** la somme desdites surfaces constituant la surface totale d'intersection $S_E$. Dans le cas présent, tous les éléments de liaison ont leurs surfaces d'intersection **71, 72, 73, 74, 75** entièrement situées sous la surface de roulement **2** et à une distance radiale de ladite surface plus petite que la profondeur **h** de la découpure. De plus, la surface totale de liaison $S_E$ est au plus égale à **80%** de la surface $S_G$ délimitée par le contour géométrique **L** (en traits pointillés) de longueur minimale construit sur la paroi **6** et enveloppant toutes les surfaces d'intersection **71, 72, 73, 74, 75** des éléments de liaison **7** avec la paroi **6.** Ces trois conditions combinées permettent d'obtenir une sculpture comportant de très nombreuses découpures sur des profondeurs relativement importantes comparativement à l'épaisseur de la bande de roulement, lesdites découpures créant de nombreuses arêtes de gomme sur la surface de roulement **2,** ladite sculpture ainsi réalisée conservant une rigidité suffisante pour résister aux sollicitations dues à l'écrasement et au roulage.

De manière connue en soi, les parois principales des découpures peuvent être planes ou bien courbes.

Avantageusement et pour obtenir un effet optimum, la bande de roulement comporte une pluralité de découpures pourvue d'au moins un élément de liaison et chaque surface $S_G$, délimitée par le contour géométrique **L** de longueur minimum et enveloppant la surface totale de liaison $S_E$ sur une paroi de la découpure, est au moins égale à **15%** de la surface de la paroi $S_T$ correspondante.

La position relative des éléments de liaison d'une même découpure est déterminée de manière à maintenir pour ladite découpure une grande longueur d'arête active pour venir en contact avec le sol et cela quel que soit le niveau d'usure de la bande de roulement.

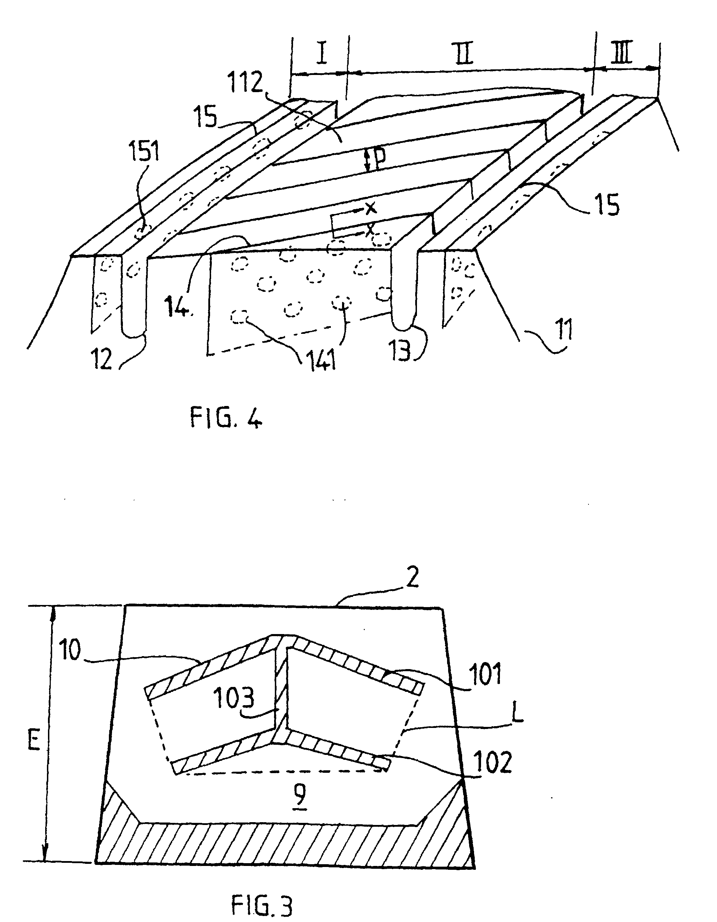

Une autre possibilité de réalisation est représentée sur la figure **3** qui montre la coupe schématique d'une nervure d'une bande de roulement **1** réalisée le long d'une paroi **9** d'une découpure pourvue d'un élément de liaison unique **10** s'étendant entre les parois principales délimitant ladite découpure. Cet élément **10** se compose de deux branches **101, 102** orientées dans le sens de la largeur de l'incision et reliées entre elles par une troisième branche **103** orientée dans le sens de l'épaisseur de la bande. Le contour **L** tracé en traits pointillés correspond au contour de longueur minimum enveloppant la surface totale de liaison de l'élément unique et passant par les extrémités des branches **101** et **102**. Une variante de réalisation consiste à prolonger la branche **103** reliant les branches **101** et **102** jusqu'à la surface de roulement **2** en créant ainsi un volume unique correspondant à la découpure.

La figure **4** représente partiellement une bande de roulement **11** d'un pneumatique comportant des incisions orientées dans le sens circonférentiel et des incisions orientées dans le sens transversal, chacune desdites incisions étant pourvues d'éléments de liaison et débouchant sur la surface de roulement **112** de ladite bande. La bande de roulement **11** est divisée axialement en trois régions annulaires notées **I, II, III,** la région médiane **II** étant séparée des deux régions bord **I** et **III** par des rainures **12** et **13** orientées circonférentiellement. De manière à améliorer la performance en adhérence du pneumatique équipé d'une telle bande de roulement sans pour autant être pénalisé en bruit de roulage, on prévoit dans la partie médiane **II** une pluralité d'incisions **14** de faible largeur orientées essentiellement transversalement, lesdites incisions **14** débouchant de chaque côté de la partie **II** dans les rainures **12** et **13**. Ces incisions **14** de profondeur **h** et de largeur **e** au moins égale à **0,1** mm sont disposées régulièrement selon un pas moyen **p** de manière à ce que le rapport **h/(p-e)** soit plus grand que **0,9.** Ainsi, il est possible d'avoir une densité élevée d'arêtes dans l'empreinte de contact sans qu'il en résulte une altération des caractéristiques mécaniques de la partie **II.**

Dans les parties bord **I** et **III**, il est prévu au moins une incision **15** orientée essentiellement dans la direction circonférentielle. Toutes les incisions d'orientation transversale **14** et les incisions circonférentielles **15** sont pourvues d'une pluralité d'éléments de liaison respectivement **141** et **151** reliant les parois principales formant lesdites incisions.

Par orientées essentiellement transversalement, on entend que les axes moyens des traces des incisions sur la surface de roulement **112** font avec la direction transversale de la bande de roulement un angle au plus égal à **45°.** Par orientées essentiellement circonférentiellement, on entend que les axes moyens des traces des incisions sur la surface de roulement font avec la direction transversale de la bande de roulement un angle au moins égal à **75°** et au plus égal à **90°**. L'axe moyen de la trace d'une découpure sur la surface de roulement d'une bande de roulement correspond à la direction moyenne évaluée entre les points des arêtes de ladite découpure sur la surface de roulement à l'aide d'une méthode des moindres carrés des distances.

De cette façon, il est possible d'obtenir un pneumatique présentant de bonnes performances en adhérence dans le sens longitudinal de la bande de roulement grâce à la présence d'incisions orientées transversalement dans la partie **II** et en adhérence dans le sens transversal grâce à la présence d'au moins une incision orientée quasiment circonférentiellement dans les parties **I** et **III,** lesdites incisions étant pourvues d'éléments de liaison reliant leurs parois.

De manière complémentaire, il est possible de prévoir des éléments de liaison reliant aussi les parois délimitant les rainures circonférentielles séparant la partie **II** des parties **I** et **III.**

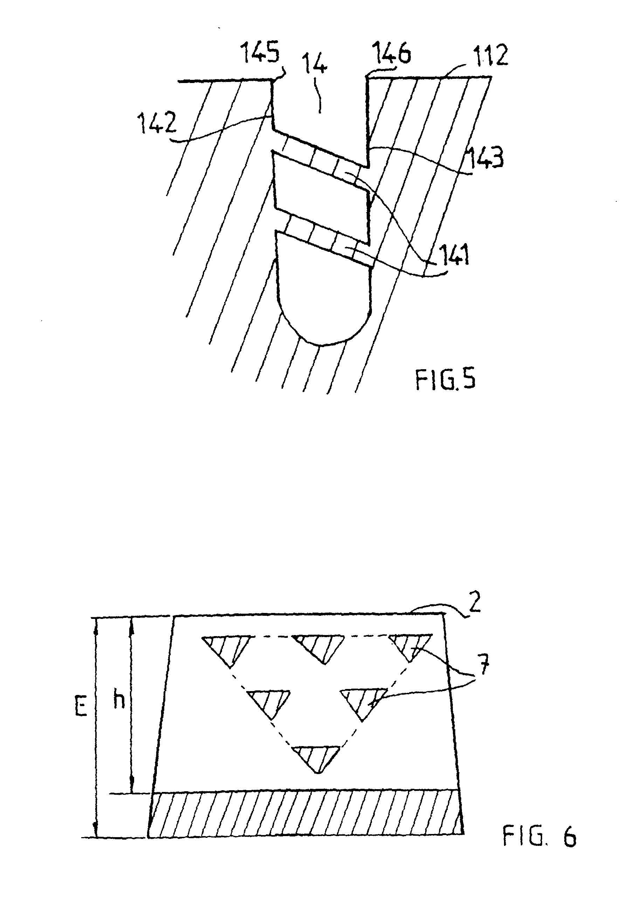

Après usure partielle de la bande de roulement selon l'invention, au moins un élément de liaison d'une découpure apparaît à la surface de roulement et diminue d'autant les longueurs des arêtes **145, 146** formées par chacune des parois principales de ladite découpure avec la surface de roulement **2**. Pour atténuer cet effet et comme cela est montré sur la figure **5**, correspondant à une coupe suivant **XX** de la bande de roulement représentée sur la figure **4**, il est judicieux de disposer chaque élément de liaison **141** entre une première paroi principale **142** et une deuxième paroi principale **143** de la découpure **14** de façon à ce que ledit élément fasse, avec la perpendiculaire à la surface de roulement de la bande de roulement neuve, un angle différent de **90°** et préférentiellement entre **30°** et **70°**.

Une autre manière de résoudre l'inconvénient qui vient d'être mentionné et également pour éviter la localisation des usures sur certaines régions d'une bande de roulement selon l'invention, il est avantageux de prévoir, comme cela est le cas pour les incisions **14** localisées dans la partie médiane **II** de la bande de roulement visualisée figure **4**, entre deux quelconques découpures voisines d'orientation sensiblement identique, un décalage dans le sens radial de la position des éléments de liaison. Ainsi, on répartit de façon aléatoire la position des arêtes de gomme formées par l'intersection des parois des découpures. Le fait que les éléments de liaison arrivent à la surface de roulement après usure de façon plus ou moins décalée permet de maintenir en permanence (c'est à dire pendant toute la durée de l'utilisation du pneumatique) une grande longueur d'arêtes dans la région de la surface de roulement affectée par le contact avec la route et permet de réaliser un brouillage favorable à la fois sur l'usure (on évite l'apparition d'usures anormales, c'est à dire localisées) et sur le bruit de roulage.

Dans le cas d'une utilisation faisant essentiellement appel à des caractéristiques d'adhérence dans le sens longitudinal, il est possible de prévoir uniquement une pluralité de découpures pourvues d'au moins un élément de liaison, l'axe moyen des traces desdites découpures sur la surface de roulement du pneumatique formant avec la direction transversale de la bande de roulement un angle au plus égal à **45**°. Inversement, dans le cas d'utilisation faisant essentiellement appel à des caractéristiques d'adhérence dans le sens transversal, il est possible de prévoir une pluralité de découpures pourvues d'au moins un élément de liaison, l'axe moyen des traces desdites découpures sur la surface de roulement de ladite bande à l'état neuf forme avec la direction axiale de la bande de roulement un angle au moins égal à **75**° et au plus égal à **90**°. Un résultat comparable est obtenu en réalisant une seule découpure continue et orientée selon un angle proche de **90**° avec la direction transversale de façon à ce que l'axe moyen de la trace de la découpure sur la surface de roulement forme une hélice; en effet, tout se passe dans la zone de contact avec la route comme si la bande était pourvue d'une pluralité de découpures quasiment orientées dans la direction circonférentielle.

Les découpures pourvues d'au moins un élément de liaison peuvent être perpendiculaires à la surface de roulement ou bien au moins une partie de celles-ci font, avec la direction perpendiculaire à la surface de roulement de la bande de roulement à l'état neuf, un angle moyen au plus égal à **20**° de manière à augmenter l'efficacité des arêtes de gomme dans certaines utilisations de façon à pouvoir mieux transmettre un effort moteur ou freineur selon le sens d'orientation choisi de l'inclinaison de ladite découpure.

La rigidité de la sculpture d'une bande de roulement augmentant avec la diminution de son épaisseur résultant de l'usure de ladite bande, il est judicieux de prévoir, en plus, que pour au moins une découpure, située dans la partie de la bande de roulement affectée par l'écrasement du pneumatique et pourvue d'au moins un élément de liaison, le rapport **Tp=Sp/St** diminue de façon sensiblement régulière avec l'usure du pneumatique au moins à partir d'un niveau d'usure partiel prédéterminé, **Sp** représentant, sur une des parois de ladite découpure, la surface de liaison restante après usure partielle de la bande de roulement et **St** représentant la surface totale de ladite paroi correspondant au même niveau d'usure partielle de la bande de roulement. Dans ce cadre, la figure **6** représente, vue suivant une coupe transversale, une paroi d'une découpure pourvue d'éléments de liaison **7** disposés suivant des rangées quasiment parallèles à la surface de roulement **2;** le nombre des éléments de liaison **7** par rangée augmentant au fur et à mesure qu'on se rapproche de la surface de roulement **2**.

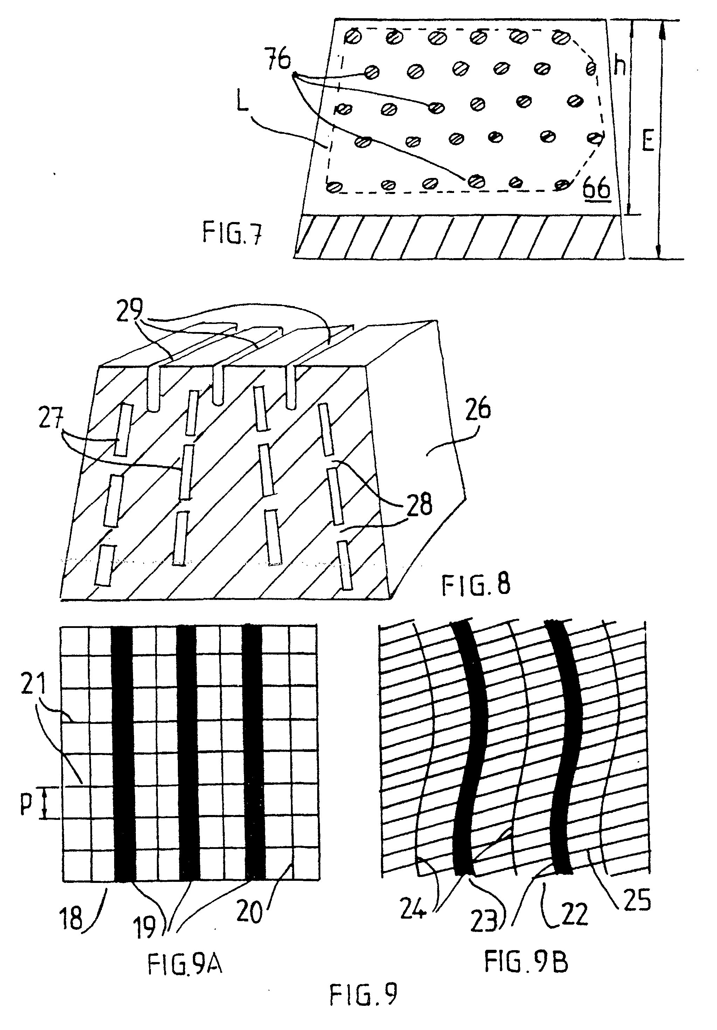

La figure **7** montre une disposition avantageuse en terme de liaison des parois principales d'une même découpure d'une bande de roulement. Sur cette figure, on voit, régulièrement réparties sur une paroi principale **66** d'une découpure, une pluralité de surfaces d'intersection **76** d'éléments de liaison avec ladite paroi de façon que la densité en éléments de liaison soit relativement importante (c'est à dire qu'il existe un grand nombre d'éléments par surface de paroi). Dans le cas présent, la surface $S_G$ délimitée par le contour **L** de longueur minimale et enveloppant toutes les surfaces d'intersection des éléments de liaison est d'environ **90%** de la surface totale de la paroi **66** tandis que la surface de liaison $S_E$ ne représente que **40%** de la surface totale. Un effet optimum sur la rigidité de la bande est atteint quand les éléments de liaison sont régulièrement distribués sur les parois de chaque découpure.

En outre et de manière avantageuse, il peut être intéressant de prévoir des éléments supplémentaires en gomme liés à une seule des parois d'une découpure pourvue d'éléments de liaison pour empêcher le rapprochement des régions des parois de ladite découpure situées entre lesdits éléments de liaison.

La demanderesse a procédé à des essais de roulage et de simulation de roulage avec des pneumatiques poids-lourd de dimension **215/75 R 17.5** comportant des bandes de roulement selon l'invention. La figure **9** représente schématiquement deux types de sculpture de bande de roulement testées. La figure **9-A** correspond à la variante **A** d'une bande de roulement **18** comportant une pluralité d'incisions **21** de largeur **0,1** mm, orientées transversalement et espacées circonférentiellement d'un pas moyen **p** de **15** mm; cette variante comporte en plus trois rainures circonférentielles **19** de largeur **5** mm qui divisent axialement la bande de roulement en quatre parties, chacune desdites parties étant encore divisée en deux par une incision circonférentielle **20** de largeur **2** mm. Toutes les découpures ont la même profondeur égale à **13,5** mm. La figure **9-B** correspond à la variante **B** d'une bande de roulement **22** comportant une pluralité d'incisions **25** de largeur **1**mm orientées suivant une direction faisant un angle moyen de **15**° avec la direction transversale du pneumatique et espacées les unes les autres d'un pas **p** moyen de **10** mm; cette variante **B** comporte en plus deux rainures **23** de forme ondulée et essentiellement circonférentielles **19** de largeur **10** mm qui divisent axialement la bande de roulement en trois parties, chacune desdites parties étant encore divisée en deux par une incision circonférentielle **24** de largeur **2** mm, lesdites incisions suivant le même profil que les rainures. Toutes les découpures des deux variantes **A** et **B** ont une profondeur identique et égale en moyenne à **13,5** mm.

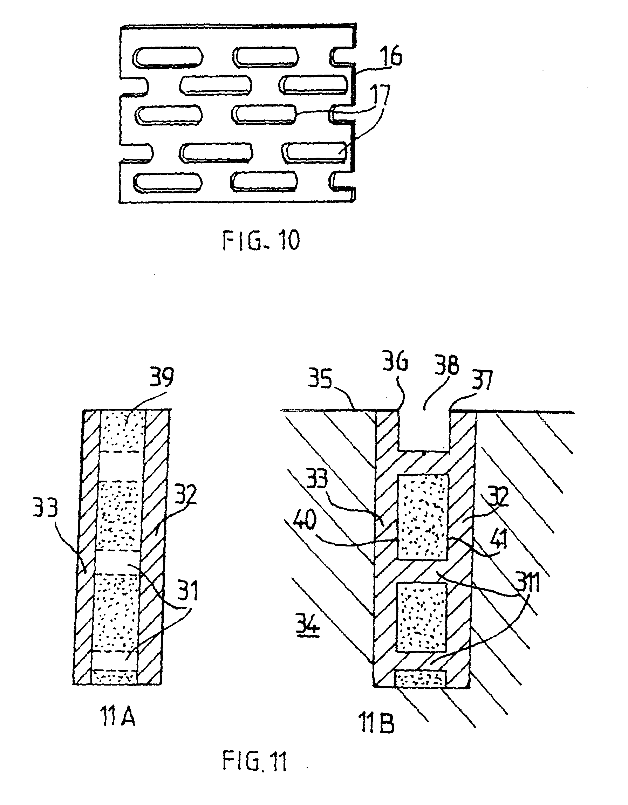

Les variantes **A** et **B** ont été réalisées de la manière suivante : après avoir découpée, suivant les tracés des incisions désirées, une bande de gomme non vulcanisée de largeur et de longueur appropriées, on réalise, en nombre égal au nombre d'incisions et de dimensions équivalentes, des intercalaires dans des feuilles de papier d'épaisseur **0,1**mm pour la variante **A** et dans des feuilles de carton d'épaisseur **1**mm pour la variante **B**. Chaque intercalaire est ensuite découpé de manière à créer une pluralité d'orifices dont la forme correspond à la forme des sections des éléments de liaison des incisions. La figure **10** montre un tel intercalaire **16** pourvu d'une pluralité d'orifices **17** de forme quasiment rectangulaire; ces orifices de dimension **2x5** mm peuvent être obtenus, par exemple, au moyen d'un procédé de coupe au laser ou par poinçonnage. Ensuite, ces intercalaires **16** sont mis en place dans les découpes réalisées dans la bande de roulement non vulcanisée

Cette bande de roulement est ensuite placée sur une ébauche de pneumatique non vulcanisée avant d'être moulée avec le pneumatique dans un moule de vulcanisation. Au cours de la vulcanisation de ladite bande, la gomme de la bande traverse les intercalaires aux endroits des orifices pour former les éléments de liaison des découpures, lesdites découpures étant remplies par le matériau constitutif des intercalaires. Pour obtenir les variantes A et B, les rainures et les incisions circonférentielles dépourvues d'éléments de liaison ont été réalisées par taillage après fabrication des pneumatiques comportant les bandes de roulement. Bien entendu, les rainures et incisions supplémentaires peuvent être réalisées par le procédé conforme à l'invention.

Dans le cas d'espèce, les pneumatiques choisis étaient des pneumatiques de type poids lourd de dimension **215/75** R **17.5** dont les incisions pourvues d'éléments de liaison avaient un taux de liaison $T_P$ égal à **45%** et pour lesquelles les rapports $S_E/S_T$ et $S_E/S_G$ étaient égaux respectivement à **45%** et à **40%.** Les taux d'entaillement des surfaces de roulement à l'état neuf des deux variantes **A** et **B** étaient respectivement de **15%** et de **18%** (par taux d'entaillement, on entend le rapport entre la surface des découpures sur la surface de roulement et la surface totale de ladite surface de roulement).

Des tests d'adhérence ont été réalisés avec un véhicule poids lourd équipé d'une roue supplémentaire destinée à des mesures, ladite roue étant équipée d'un pneumatique selon la variante **A** ou selon la variante **B**.

Dans cet essai, on détermine l'apparition du glissement du pneumatique par rapport à la route pour une vitesse donnée et sous l'action d'un effort freineur déterminé; ce test est réalisé sur une piste d'essai ayant un revêtement lisse et sur laquelle est présente une couche d'eau d'épaisseur environ **1,5** mm. Un pneumatique de type XZE, de même dimension et ayant un taux d'entaillement de **18%**, a été pris comme base de référence. Les taux d'entaillement des variantes **A** et **B** sont comparables à celui du pneumatique choisi comme référence.

De façon inattendue, les résultats des tests d'adhérence ont montré que, comparativement au pneumatique de référence, les pneumatiques de la variante **A** étaient meilleurs que les pneumatiques de référence d'environ **15%**, tandis que les pneumatiques de la variante **B** étaient très supérieurs aux pneumatiques de référence, d'au moins **30%.** L'écart de performance entre les variantes **A** et **B** peut s'expliquer en partie par la différence de largeur des incisions.

D'autre part, des essais de mesure de bruit émis en roulage dans les conditions définies par la norme ISO **362** ont montré, de façon tout aussi surprenante, que le niveau de bruit émis par un pneumatique pourvu d'une bande de roulement selon l'invention était réduit d'au moins **3** dbA et d'au moins **2** dbA pour les variantes **A** et **B** respectivement comparativement aux pneumatiques de référence.

Alors qu'il est connu, dans le cas de sculptures usuelles pour pneumatiques poids lourd, que l'obtention d'une bonne performance en bruit s'accompagne toujours d'une baisse de la performance en adhérence sur sol lisse, ces essais ont montré que grâce à une sculpture de bande de roulement conforme à l'invention, il est possible d'obtenir un gain très net de la performance à la fois en adhérence et en bruit de roulage.

La bande de roulement selon l'invention et le procédé de fabrication d'une telle bande permettent d'obtenir, avec un faible taux d'entaillement, c'est à dire un rapport entre la surface correspondant aux découpures et la surface totale de ladite bande destinée à être en contact avec le sol, une performance au moins équivalente à une bande de roulement usuelle ayant un plus fort taux d'entaillement; le grand nombre d'arêtes de gomme, combiné avec le fait que la rigidité de la bande de roulement n'est pas affectée de manière sensible compense l'écart des taux d'entaillement.

Il faut noter que la présence d'éléments de liaison dans les découpures permet de conserver à la bande de roulement une rigidité qui se traduit par une perte en résistance au roulement (énergie dissipée au cours du roulage d'un pneumatique équipé de ladite bande) qui est nettement moindre que celle obtenue avec le même pneumatique dont les éléments de liaison ont été éliminés.

Après fabrication des pneumatiques pourvus d'une bande de roulement selon l'invention, il est possible d'éliminer partiellement, c'est à dire uniquement au voisinage de la surface de roulement, les intercalaires de façon à dégager les arêtes des incisions sur la surface de roulement. Par la suite, le matériau constituant les intercalaires s'élimine au fur et à mesure de l'usure de la bande de roulement.

De façon à obtenir un meilleur aspect de la bande de roulement en sortie du moule de vulcanisation de ladite bande, il peut être envisagé de prévoir que les découpures pourvues d'éléments de liaison soient entièrement situées sous la surface de roulement de la bande de roulement neuve et qu'il soit prévu sur ladite surface de roulement une pluralité de découpures sans éléments de liaison et de profondeur au moins légèrement supérieure à la distance séparant la surface de roulement des découpures pourvues d'éléments de liaison. Une telle réalisation est visible sur la figure **8** qui montre une coupe schématique d'une bande de roulement **26** à l'état neuf comportant une pluralité d'incisions **27** pourvues d'une pluralité d'éléments de liaison **28**. La surface de roulement est pourvue d'une pluralité de découpures **29** de faible profondeur destinées à jouer un rôle actif dans les premiers temps d'usage de la bande de roulement. Après usure partielle de la bande, les incisions **29** disparaissent pour laisser la place aux incisions sous-jacentes **27**.

Une variante de réalisation des intercalaires consiste à employer un matériau se présentant sous la forme d'un tissu comportant des fils de chaîne et des fils de trame, ledit tissu ayant la propriété de résister à la vulcanisation de ladite bande et de pouvoir s'éliminer progressivement pendant le roulage du pneumatique, les espaces délimités par les fils de trame et les fils de chaîne permettant le moulage des éléments de liaison de ladite découpure. Le matériau constituant les intercalaires peut aussi être formé d'un ou plusieurs fils formant un réseau de fils pouvant s'éliminer en totalité après vulcanisation de la bande de roulement ou bien progressivement au cours du roulage.

Le procédé de fabrication selon l'invention permet, en outre, de réaliser des découpures dont les parois sont recouvertes d'un mélange de gomme différent du mélange constitutif du reste de la bande de roulement, comme cela est visualisé sur la figure **11**, dans le cas particulier d'une incision pourvue d'éléments de liaison; bien entendu, le procédé qui est décrit pour former ce type d'incision est également applicable à une incision non pourvue d'éléments de liaison.

La figure **11-B** montre une variante d'une découpure **38** pourvue d'une pluralité d'éléments de liaison **311** réalisée en suivant les étapes suivantes :

-  on réalise au moins un intercalaire **39** comportant une pluralité d'orifices **31** (visibles sur la figure **11-A**);

-  on forme un empilement en recouvrant au moins un intercalaire sur chacune de ses deux faces principales avec deux couches de gomme crue (**32, 33**), chaque couche ayant une épaisseur proche de l'épaisseur de l'intercalaire;

-  on exerce une pression de part et d'autre de l'empilement ainsi constitué de façon à appliquer plus ou moins fortement chaque couche (**32, 33**) contre les parois de l'intercalaire et de façon à forcer chaque couche à pénétrer dans les orifices jusqu'à venir en contact l'une avec l'autre; les contacts ainsi formés facilitent la manipulation de l'intercalaire enveloppé de mélange de gomme avant la mise en place dans la découpure prévue dans la bande de roulement crue;

-  on insère chaque intercalaire dans une bande de gomme non vulcanisée;

-  on procède ensuite à la vulcanisation et au moulage de la bande ainsi constituée dans un moule approprié. Ce moule peut comporter des éléments de relief faisant saillie à sa surface de moulage pour mouler des découpures sous forme de rainures ou incisions.

Une variante de ce procédé consiste dans un premier temps à former un empilement composé d'un intercalaire non troué et recouvert sur ses deux faces avec deux couches de gomme crue et dans un deuxième temps à trouer ledit empilement suivant son épaisseur avant d'insérer ledit empilement dans une bande de gomme crue et finalement de procéder au moulage et à la vulcanisation de ladite bande. De cette façon, la gomme composant la bande de roulement occupe chaque orifice et vient former chaque élément de liaison de la découpure ainsi moulée.

Après vulcanisation, on peut éliminer, au moins en surface, le matériau constituant l'intercalaire **39** comme cela est visible sur la figure **11-B**. L'enrobage de l'intercalaire est réalisé avec des mélanges de gomme qui peuvent être de même nature que le mélange constitutif de la bande de roulement ou bien de nature différente. Un mélange de nature différente confère aux arêtes de la découpure une meilleure résistance à l'abrasion résultant du contact avec la route. Il peut aussi être envisagé d'employer deux couches de mélanges de gomme de nature différente de part et d'autre de l'intercalaire pour tenir compte, notamment, d'un sens de roulage préférentiel du pneumatique. En outre, les couches peuvent avoir des épaisseurs différentes et supérieures à l'épaisseur de l'intercalaire. Chaque couche de gomme recouvrant l'intercalaire peut être formée d'une ou plusieurs couches de mélange.

Il peut être intéressant qu'au moins une découpure pourvue d'au moins un élément de liaison ait au moins un élément de liaison formé en mélange de gomme de nature et de caractéristiques mécaniques différentes du mélange composant la bande de roulement.

L'ensemble des variantes décrites dans la présente application peuvent faire l'objet de combinaison selon le but recherché. Par exemple, un pneumatique peut comporter à la fois une pluralité d'incisions certaines d'entre-elles étant pourvues d'éléments de liaison et les autres non, lesdites incisions étant formées par exemple selon l'un des procédés qui viennent d'être décrits.

Le domaine d'application de la présente invention concerne tous les types de pneumatiques et en particulier les pneumatiques de type routier, qu'ils soient destinés à équiper des véhicules de type voitures de tourisme, camionnettes, poids lourd et notamment des pneumatiques pour métro. Plus spécifiquement , les pneumatiques destinés à équiper les essieux moteur de véhicules poids-lourd ont leurs caractéristiques d'adhérence et de bruit sensiblement améliorées dès lors qu'ils sont pourvus d'une bande de roulement selon l'invention. L'application d'une sculpture suivant l'invention à des pneumatiques pour engins de génie civil et plus particulièrement des véhicules type "dumper" est bénéfique puisqu'elle permet de réaliser une bande de roulement avec une pluralité de découpures tout en assurant une rigidité suffisante à ladite bande sous les efforts d'écrasement et les efforts moteur ou freineur.

Dans le domaine du pneumatique poids-lourd et tourisme, les meilleures performances sont obtenues dès lors qu'au moins **80%** des incisions pourvues d'éléments de liaison selon l'invention ont chacune une largeur au moins égale à **0,1** mm et au plus égale à **2** mm.

Une bande de roulement conforme à l'invention peut aussi être placée sur une ébauche de pneumatique avant d'être vulcanisée avec ladite ébauche de pneumatique dans un moule de vulcanisation approprié.

Enfin, une bande conforme à l'invention peut comporter une pluralité de blocs de gomme délimités par des rainures, lesdits blocs comportant au moins une incision elle-même pourvue d'au moins un élément de liaison entre les parois principales de ladite incision; les rainures peuvent, en outre, être pourvues d'éléments de liaison de façon à réaliser une sculpture très performante.

**Revendications**

1. Bande de roulement (**1, 26**) d'épaisseur **E,** pour pneumatique, pourvue d'une surface de roulement (**2**), ladite bande (**1**) étant pourvue d'une pluralité de découpures (**3, 4, 27**), chaque découpure (**3**) étant définie par l'espace délimité principalement entre deux parois (**5, 6** ) en regard l'une de l'autre, lesdites parois étant perpendiculaires à ou obliques par rapport à la surface de roulement (**2**), et ayant une profondeur **h**, mesurée comme la distance radiale maximale mesurée entre les points les plus éloignés radialement des parois de ladite découpure, au plus égale à l'épaisseur **E** de la bande de roulement, **caractérisée en ce que** :

- les deux parois principales (**5, 6**) d'au moins une découpure (**3**) située dans la partie de la bande de roulement affectée par l'écrasement au sol du pneumatique en roulage sont reliées par au moins deux éléments de liaison en gomme (**7**), les éléments de liaison (**7**) présentant avec chacune des parois (**5, 6**) une surface de liaison $S_E$ égale à la surface totale d'intersection, ladite surface $S_E$ sur chacune des parois étant au moins égale à **10%** de la surface $S_T$ de ladite paroi,

- tous les points du contour extérieur de la surface d'intersection d'au moins un élément de liaison (**7**) avec l'une des parois (**5 6**) sont situés à une distance de la surface de roulement (**2**) strictement inférieure à la profondeur de la découpure,

- et **en ce que**, sur chacune des parois, la surface de liaison $S_E$ est au plus égale à **80%** de la surface $S_G$**,** la surface $S_G$ étant égale à la surface, mesurée sur ladite paroi de la découpure, délimitée par le contour géométrique **L** de longueur minimum et enveloppant la surface de liaison $S_E$.

2. Bande de roulement selon la revendication **1 caractérisée en ce que**, pour au moins une découpure (**3, 4, 27**) comportant au moins deux éléments de liaison (**7**), la surface $S_G$ délimitée par le contour géométrique **L** de longueur minimum et enveloppant la surface totale de liaison $S_E$ sur une paroi principale de la découpure est au moins égale à **15%** de la surface $S_T$ de la paroi correspondante.

3. Bande de roulement selon l'une des revendications **1** ou **2 caractérisée en ce que** toutes les découpures (**3, 4, 27**) comportant au moins deux éléments de liaison (**7, 28**) sont entièrement situées sous la surface de roulement (**2**) de la bande de roulement à l'état neuf et **en ce qu'**il est, en outre, prévu à la surface de la bande de roulement du pneumatique neuf des découpures (**29**) dont la profondeur est supérieure à la plus petite des distances séparant les découpures, comportant au moins deux éléments de liaison, et la surface de roulement de la bande de roulement du pneumatique à l'état neuf.

4. Bande de roulement pour pneumatique selon l'une quelconque des revendications **1** à **3 caractérisée en ce qu'**elle comporte une pluralité de découpures (**3, 4, 14**) pourvues d'au moins deux éléments de liaison (**7, 141**), l'axe moyen des traces desdites découpures (**3, 4, 14**) sur la surface de roulement du pneumatique formant avec la direction transversale de la bande de roulement un angle au plus égal à **45°.**

**5.** Bande de roulement pour pneumatique selon l'une quelconque des revendications **1** à 3 **caractérisée en ce qu'**elle comporte une pluralité de découpures (**3, 4, 15**) pourvues d'au moins deux éléments de liaison (**7, 151**), l'axe moyen de la trace de chacune desdites découpures (**3, 4, 15**) sur la surface de roulement de ladite bande à l'état neuf formant avec la direction transversale de la bande de roulement un angle au moins égal à **75°** et au plus égal à **90°**.

**6.** Bande de roulement pour pneumatique selon l'une quelconque des revendications **1** à **3 caractérisée en ce qu'**elle comporte, sur au moins l'un de ses bords (**I, III**) dans le sens transversal, au moins une découpure (**15**) pourvue d'au moins deux éléments de liaison (**151**), ladite découpure (**15**) étant orientée de façon que l'axe moyen de sa trace sur la surface de roulement fasse un angle au moins égal à **75°** et au plus égal à **90°** par rapport à la direction transversale de la bande, et **en ce que** la partie médiane (**II**) de la bande de roulement comporte une pluralité de découpures (**14**) pourvues d'au moins deux éléments de liaison (**141**), lesdites découpures (**14**) étant orientées de façon que l'axe moyen de leurs traces sur la surface de roulement fasse un angle au moins égal à **0°** et au plus égal à **45°** par rapport à la direction transversale de la bande.

**7.** Bande de roulement pour pneumatique selon l'une quelconque des revendications **1** à **6 caractérisée en ce qu'**au moins une des découpures (**3, 4, 14, 15**) située dans la partie de la bande de roulement affectée par l'écrasement du pneumatique et pourvue d'au moins deux éléments de liaison (**7, 141, 151**) a, sur une surface parallèle à la surface de roulement et située radialement à l'intérieur de ladite surface, un tracé dont l'orientation de l'axe moyen est différente de l'orientation de l'axe moyen de la trace de ladite découpure sur la surface de roulement de la bande de roulement neuve.

**8.** Bande de roulement pour pneumatique selon l'une quelconque des revendications **1** à **7 caractérisée en ce qu'**au moins une des découpures (**3, 4, 14, 15**) pourvues d'au moins deux éléments de liaison (**7, 141, 151**) fait, avec la direction perpendiculaire à la surface de roulement (**2**) de la bande de roulement à l'état neuf un angle moyen au plus égal à **20°**.

**9.** Bande de roulement d'épaisseur **E,** pour pneumatique, pourvue d'une surface de roulement (**2**), ladite bande (**1**) étant pourvue d'une pluralité de découpures (**3, 4**) orientées quasiment dans la même direction, chacune desdites découpures (**3**) étant définie par l'espace délimité principalement entre deux parois (**5, 6**) en regard l'une de l'autre, lesdites parois étant perpendiculaires à ou obliques par rapport à la surface de roulement (**2**), lesdites découpures ayant une profondeur **h**, mesurée comme la distance, suivant une direction radiale, entre les points des parois de ladite découpure les plus proches de la surface de roulement et les points desdites parois les plus éloignés de la surface de roulement du pneumatique neuf, **h** étant au plus égale à l'épaisseur **E** de la bande de roulement, lesdites découpures étant espacées d'un pas moyen égal à **p**, ladite bande étant **caractérisée en ce que**:

- les deux parois principales (**5, 6**) des découpures (**3, 4**) sont reliées par au moins un élément de liaison en gomme (**7**), le (les) élément(s) de liaison (**7**) présentant avec chacune des parois (**5, 6**) une surface de liaison $S_E$ égale à la surface totale d'intersection;
- le taux de liaison $T_P = S_E/S_T$ pour chaque découpure est au moins égal à **0,10** et au plus égal à **0,80**, $S_E$ étant égale à la surface totale d'intersection du/des élément(s) de liaison (**7**) sur chacune des parois (**5, 6**), $S_T$ représentant la surface totale de chaque paroi principale de ladite découpure;
- le rapport **p/h,** entre le pas **p** et la profondeur **h** des incisions, est au moins égal à **0,2** et au plus égal à **1,9,** bornes comprises.

**10.** Bande de roulement selon la revendication **9 caractérisée en ce que** le rapport **p/h** vérifie l'inégalité suivante :

$$\frac{p}{h} \leq \frac{1}{5}\left(\frac{1}{Tp}\right)^{0.75}$$

**11.** Bande de roulement selon la revendication **10 caractérisée en ce que** le rapport **p/h** vérifie l'inégalité suivante :

$$\frac{p}{h} \leq 2\,(1\text{-}Tp)^{0.5}$$

**12.** Bande de roulement d'épaisseur **E,** pour pneumatique, pourvue d'une surface de roulement (**2**), ladite bande (**1**) étant pourvue d'une pluralité de découpures (**3, 4**) orientées quasiment dans la même direction, chacune desdites découpures (**3**) étant définie par l'espace délimité principalement entre deux parois (**5, 6**) en regard l'une de l'autre, lesdites parois étant perpendiculaires à ou obliques par rapport à la surface de roulement (**2**), et ayant une largeur **e** et une profondeur **h**, mesurée comme la distance, suivant une direction radiale, entre les points des parois de ladite découpure les plus proches de la surface de roulement et les points desdites parois les plus éloignés de la surface de roulement du pneumatique neuf, au plus égale à l'épaisseur **E** de la bande de roulement, lesdites découpures étant espacées d'un pas moyen égal à **p**, ladite bande étant **caractérisée en ce que**:

- les deux parois principales (**5, 6**) d'une pluralité de découpures (**3, 4**) sont reliées par au moins deux éléments de liaison en gomme (**7**), les éléments de liaison (**7**) présentant avec chacune des parois (**5, 6**) une surface de liaison $S_E$ égale à la surface totale d'intersection,
- et **en ce que** le rapport $T_P = S_E/S_T$, représentant, sur une des parois principales (**5, 6**) de ladite découpure, le taux de liaison entre les parois principales d'une même découpure, est au moins égal à **0,10** et est au plus égal à la valeur suivante :

$$\frac{1}{\left(1+\frac{1}{3}\varepsilon\right)^{0,75}} \qquad \text{avec } \varepsilon = (p-e)/h$$

13. Bande de roulement pour pneumatique selon la revendication **12 caractérisée en ce qu'**au moins **40%** des découpures affectées par l'écrasement ont au moins un élément de liaison et **en ce que** le taux de liaison $T_P$ desdites découpures est au moins égal à **0,25.**

14. Bande de roulement pour pneumatique selon l'une des revendications **12** ou **13 caractérisée en ce que** les découpures sont des incisions de largeur au moins égale à **0,1** mm et **en ce que** le rapport **h/(p-e)** est plus grand que **0,9.**

15. Bande de roulement pour pneumatique selon l'une quelconque des revendications **1** à **8** ou **12** à **14 caractérisée en ce que** pour au moins une découpure (**3, 4, 14, 15**), située dans la partie de la bande de roulement affectée par l'écrasement du pneumatique et pourvue d'au moins deux éléments de liaison (**7, 141, 151**), le rapport $T_P = S_P/S_T$ diminue de façon quasiment régulière avec l'usure du pneumatique au moins à partir d'un niveau d'usure déterminé au préalable, $S_P$ représentant, sur une des parois principales de ladite découpure, la surface de liaison restante après usure partielle de la bande de roulement et $S_T$ représentant la surface totale de ladite paroi correspondant au même niveau d'usure partielle de la bande de roulement.

16. Bande de roulement pour pneumatique selon l'une quelconque des revendications **1** à **15 caractérisée en ce que** chaque élément de liaison (**7, 141**) entre une première paroi principale et une deuxième paroi principale d'au moins une découpure (**3, 4, 14, 15**) fait, avec la direction perpendiculaire à la surface de la bande neuve, un angle différent de **90°** de façon à maintenir une grande longueur d'arête sur la surface de roulement quel que soit le degré d'usure de la bande de roulement.

17. Bande de roulement pour pneumatique selon l'une quelconque des revendications **12** à **15** comportant une pluralité de découpures (**3, 4, 14**) pourvues d'au moins deux éléments de liaison (**7, 141, 151**) reliant une première paroi principale à une deuxième paroi principale desdites découpures **caractérisée en ce que** pour deux découpures voisines et d'orientation quasiment identique les positions radiales et/ou axiales des éléments de liaison de chacune desdites découpures sont différentes de façon à pouvoir conserver une grande longueur d'arêtes actives sur la surface de roulement quel que soit le niveau d'usure de la bande.

18. Bande de roulement d'épaisseur **E**, pour pneumatique, pourvue d'une surface de roulement, ladite bande étant pourvue d'une pluralité de découpures, chaque découpure étant définie par l'espace délimité principalement entre deux parois principales en regard l'une de l'autre, lesdites parois étant perpendiculaires à ou obliques par rapport à la surface de roulement, et ayant une profondeur **h**, mesurée comme la distance, suivant une direction radiale, des points du contour de ladite découpure les plus éloignés de la surface de roulement du pneumatique neuf, au plus égale à l'épaisseur **E** de la bande de roulement, **caractérisée en ce que** :

- les deux parois principales d'au moins une découpure située dans la partie de la bande de roulement affectée par l'écrasement au sol du pneumatique en roulage sont reliées par une pluralité d'éléments de liaison en gomme, lesdits éléments de liaison présentant avec au moins une paroi principale (**66**) une surface totale de liaison $S_E$ égale à la somme des surfaces d'intersection (**76**) de tous les éléments de liaison avec ladite paroi, ladite surface de liaison $S_E$ sur chacune des parois étant au moins égale à **10%** de la surface $S_T$ de ladite paroi,

- chaque élément de liaison présente avec chacune des parois (**66**) une surface d'intersection (**76**) au plus égale à (**ExE/20**),

- et **en ce que** la surface $S_G$ délimitée par le contour géométrique **L** de périmètre minimum et enveloppant la surface totale de liaison $S_E$ est au moins égale à **70%** de la surface $S_T$ de ladite paroi.

19. Bande de roulement pour pneumatique selon la revendication **18 caractérisée en ce que** les surfaces d'intersection (**76**) de tous les éléments de liaison sont régulièrement distribuées sur les surfaces des parois principales d'au moins une découpure.

20. Bande de roulement pour pneumatique selon l'une quelconque des revendications **1** à **19 caractérisée en ce que** des éléments supplémentaires en gomme sont prévus dans au moins une découpure pour empêcher le rapprochement des parois de ladite découpure, ces éléments supplémentaires n'étant liés qu'à une seule des parois principales de ladite découpure.

21. Bande de roulement pour pneumatique selon l'une quelconque des revendications **1** à **20 caractérisée en ce qu'**une pluralité de découpures (**21, 25, 38**) pourvues d'éléments de liaison (**311**) sont, au moins en partie, remplies par au moins un matériau de remplissage pouvant s'éliminer après vulcanisation de ladite bande.

22. Bande de roulement pour pneumatique selon la revendication **21 caractérisée en ce que** le matériau de remplissage a un point de fusion inférieur et voisin de la température de vulcanisation de la bande.

23. Bande de roulement pour pneumatique selon la revendication **21** ou la revendication **22 caractérisée en ce que** le matériau de remplissage est un matériau à base essentiellement de fibres, comme par exemple de la pâte à papier.

24. Bande de roulement pour pneumatique selon l'une quelconque des revendications **21** à **23 caractérisée en ce que** au moins une découpure pourvue d'au moins un élément de liaison est remplie d'un matériau se présentant sous la forme d'un tissu comportant des fils de chaîne et des fils de trame, ledit tissu ayant la propriété de résister à la vulcanisation de la bande et de pouvoir s'éliminer pendant le roulage du pneumatique, les espaces délimités par les fils de chaîne et les fils de trame correspondant aux passages des éléments de liaison de ladite découpure.

25. Bande de roulement pour pneumatique selon l'une quelconque des revendications **21** à **23 caractérisée en ce qu'**une pluralité de découpures sont, au moins en partie, remplies d'une matière se présentant sous la forme de fil(s), ladite matière pouvant s'éliminer ou être éliminée après vulcanisation de la bande de roulement.

26. Bande de roulement pour pneumatique selon l'une quelconque des revendications **1** à **25 caractérisée en ce que** pour au moins une découpure (**38**) pourvue d'au moins un élément de liaison (**311**), au moins une paroi principale de ladite découpure est recouverte d'au moins un mélange de gomme (**32, 33**) différent du mélange de gomme (**34**) composant la bande de roulement et présentant des caractéristiques améliorées de résistance à l'abrasion.

27. Bande de roulement pour pneumatique selon la revendication **26 caractérisée en ce que** les mélanges de gomme (**32, 33**) recouvrant les parois en vis-à-vis d'une même découpure sont de nature différentes.

28. Bande de roulement pour pneumatique selon l'une quelconque des revendications **1** à **27 caractérisée en ce que** quel que soit le niveau d'usure de ladite bande, la longueur d'arête active de la sculpture dans l'empreinte est au moins égale à **50%** de la longueur d'arête active sur la surface de roulement de la bande de roulement à l'état neuf.

29. Bande de roulement pour pneumatique selon l'une quelconque des revendications **1** à **28 caractérisée en ce que** au moins **80%** des découpures pourvues d'éléments de liaison ont une largeur au moins égale à **0,1** mm et au plus égale à **2** mm.

30. Bande de roulement pour pneumatique selon l'une quelconque des revendications **1** à **29 caractérisée en ce que** l'élément de liaison d'une découpure le plus proche de la surface de roulement à l'état neuf est disposé de manière à ce que les distances séparant l'arête formée par une des parois principales de ladite découpure sur la surface de roulement à l'état neuf et les points du contour de la surface d'intersection dudit élément sur ladite paroi sont comprises entre **40%** et **60%** de la profondeur **h** de la découpure.

31. Procédé de fabrication d'une bande de roulement d'épaisseur **E** pour pneumatique, ladite bande étant pourvue d'une pluralité de découpures pourvues d'au moins un élément de liaison entre les parois principales de chacune desdites découpures, comportant les étapes suivantes :

   - réalisation d'intercalaires (**16**) dans un matériau approprié, lesdits intercalaires ayant la forme générale des découpures souhaitées dans la bande de roulement et d'épaisseur égale à la largeur desdites découpures;
   - enlèvement de matière dans chaque intercalaire (**16**) pour obtenir un Ides orifice(s) (**17**) selon une répartition choisie au préalable, chaque orifice ayant une forme équivalente à la section transversale d'un élément de liaison entre deux parois principales d'une même découpure;
   - insertion des intercalaires (**16**) dans une bande de gomme non vulcanisée;

- moulage dans un moule aux dimensions de la bande de roulement, pour mouler et vulcaniser ladite bande et former les éléments de liaison dans le/les orifice(s) (**17**) des intercalaires (**16**);
- démoulage de la bande de roulement après vulcanisation.

**32.** Procédé de fabrication d'une bande de roulement selon la revendication **31 caractérisé en ce que** afin de permettre l'insertion des intercalaires (**16**) dans une bande de gomme non vulcanisée on réalise au préalable des découpures de profondeur inférieure ou égale à l'épaisseur de ladite bande de gomme non vulcanisée.

**33.** Procédé de fabrication d'une bande de roulement d'épaisseur **E** pour pneumatique selon la revendication **31** ou la revendication **32 caractérisé en ce que** après démoulage de la bande de roulement vulcanisée, il est procédé à une opération de meulage de la surface de roulement sur une profondeur suffisante pour faire apparaître en surface une pluralité d'arêtes de gomme formées par les parois des découpures pourvues d'au moins un élément de liaison.

**34.** Procédé de fabrication d'une bande de roulement d'épaisseur **E** pour pneumatique selon l'une des revendications **31** à **33 caractérisé en ce que** la bande de roulement obtenue a la forme d'un anneau fermé.

**35.** Procédé de fabrication d'une bande de roulement d'épaisseur **E** pour pneumatique selon l'une quelconque des revendications **31** à **34 caractérisé en ce que** le matériau composant les intercalaires est un matériau dont le point de fusion est inférieur à et suffisamment proche de la température de vulcanisation de ladite bande de façon à devenir fluide peu de temps avant la fin de la vulcanisation, compte tenu de la montée progressive en température de la gomme composant ladite bande, de manière à permettre l'enlèvement dudit matériau de remplissage après vulcanisation, par exemple par aspiration ou par soufflage.

**36.** Procédé de fabrication d'une bande de roulement pour pneumatique selon l'une quelconque des revendications **31** à **35 caractérisé en ce que** le matériau constituant les intercalaires est préférentiellement un matériau cellulosique, comme de la pâte à papier.

**37.** Procédé de fabrication d'une bande de roulement pour pneumatique selon l'une quelconque des revendications **31** à **36 caractérisé en ce que** les découpures pourvues d'au moins un élément de liaison ont une épaisseur d'au moins **0,4**mm.

**38.** Pneumatique comportant une bande de roulement définie selon l'une quelconque des revendications **1** à **30**.

**39.** Pneumatique selon la revendication **38 caractérisé en ce qu'**il est destiné à équiper des essieux moteur de véhicules de type poids-lourd.

**40.** Bande de roulement d'épaisseur **E,** pour pneumatique, pourvue d'une surface de roulement (**2**), ladite bande étant pourvue d'une pluralité de découpures, chaque découpure étant définie par l'espace délimité principalement entre deux parois (**9**) en regard l'une de l'autre, lesdites parois étant perpendiculaires à ou obliques par rapport à la surface de roulement (**2**), et ayant une profondeur **h**, mesurée comme la distance radiale maximale mesurée entre les points les plus éloignés radialement des parois de ladite découpure, au plus égale à l'épaisseur **E** de la bande de roulement, **caractérisée en ce que** :

- les deux parois principales (**9**) d'au moins une découpure située dans la partie de la bande de roulement affectée par l'écrasement au sol du pneumatique en roulage sont reliées par un élément de liaison en gomme (**10**), cet élément de liaison (**10**) présentant avec chacune des parois (**9**) une surface de liaison $S_E$ égale à la surface totale d'intersection, ladite surface $S_E$ sur chacune des parois étant au moins égale à **15%** de la surface $S_T$ de ladite paroi et au plus égale à **40%** de la même surface $S_T$,
- tous les points du contour extérieur de la surface d'intersection de l'élément de liaison (**10**) avec l'une des parois (**9**) sont situés à une distance de la surface de roulement (**2**) strictement inférieure à la profondeur de la découpure,
- et **en ce que** la surface $S_G$, égale à la surface, mesurée sur ladite paroi de la découpure, délimitée par le contour géométrique **L** de longueur minimum et enveloppant la surface de liaison $S_E$. est au moins égale à **90%** de la surface de paroi $S_T$.

**41.** Bande de roulement pour pneumatique selon la revendications **40 caractérisée en ce que** pour au moins une découpure, située dans la partie de la bande de roulement affectée par l'écrasement du pneumatique et pourvue d'un élément de liaison (**10**)**,** le rapport $T_P = S_P/S_T$ diminue de façon quasiment régulière avec l'usure du pneumatique au moins à partir d'un niveau d'usure déterminé au préalable, $S_P$ représentant, sur une des parois principales de ladite découpure, la surface de liaison restante après usure partielle de la bande de roulement et $S_T$ représentant la surface totale de ladite paroi correspondant au même niveau d'usure partielle de la bande de roulement.

**42.** Bande de roulement pour pneumatique selon l'une quelconque des revendications **40** ou **41 caractérisée en ce que**, pour au moins une découpure pourvue d'au moins un élément de liaison (**10**) entre une première paroi principale et une deuxième paroi principale de ladite découpure, chaque élément de liaison (**10**) fait, avec la direction perpendiculaire à la surface de la bande neuve, un angle différent de **90°** de façon à maintenir une grande longueur d'arête sur la surface de roulement quel que soit le degré d'usure de la bande de roulement.

**43.** Bande de roulement pour pneumatique selon l'une quelconque des revendications **40** à **42** comportant une pluralité de découpures pourvues d'un élément de liaison (**10**) reliant une première paroi principale à une deuxième paroi principale desdites découpures **caractérisée en ce que** pour deux découpures voisines et d'orientation quasiment identique les positions radiales et/ou axiales des éléments de liaison de chacune desdites découpures sont différentes de façon à pouvoir conserver une grande longueur d'arêtes actives sur la surface de roulement quel que soit le niveau d'usure de la bande.

**44.** Bande de roulement pour pneumatique selon l'une quelconque des revendications **40** à **43 caractérisée en ce que** pour au moins une découpure pourvue d'un élément de liaison (**10**), au moins une paroi principale de ladite découpure est recouverte d'au moins un mélange de gomme différent du mélange de gomme composant la bande de roulement et présentant des caractéristiques améliorées de résistance à l'abrasion.

**45.** Bande de roulement pour pneumatique selon l'une quelconque des revendications **40** à **44 caractérisée en ce que** les mélanges de gomme recouvrant les parois en vis-à-vis d'une même découpure sont de nature différente.

**46.** Bande de roulement selon l'une quelconque des revendications **40** à **45 caractérisée en ce que** toutes les découpures comportant au moins un élément de liaison (**10**) sont entièrement situées sous la surface de roulement (**2**) de la bande de roulement à l'état neuf et **en ce qu'**il est, en outre, prévu à la surface de la bande de roulement du pneumatique neuf des découpures dont la profondeur est supérieure à la plus petite des distances séparant les découpures, comportant au moins un élément de liaison, et la surface de roulement de la bande de roulement du pneumatique à l'état neuf.

**Claims**

**1.** A tread (1, 26) of thickness E for a tyre, provided with a running surface (2), said tread (1) being provided with a plurality of cutouts (3, 4, 27), each cutout (3) being defined by the space defined principally between two opposing walls (5, 6), said walls being perpendicular to or oblique to the running surface (2), and having a depth h, measured as the maximum radial distance measured between the points of the walls of said cutout which are radially farthest away, at most equal to the thickness E of the tread, **characterised in that**:

- the two main walls (5, 6) of at least one cutout (3) located in the part of the tread affected by the loading on the ground of the tyre during travel are connected by at least two rubber connecting elements (7), the connecting elements (7) having with each of the walls (5, 6) a connection surface $S_E$ corresponding to the total intersection surface, said surface $S_E$ on each of the walls being at least equal to 10% of the surface $S_T$ of said wall,

- all the points of the outer contour of the surface of intersection of at least one connecting element (7) with one of the walls (5, 6) are located at a distance from the running surface (2) which is strictly less than the depth of the cutout,

- and **in that**, on each of the walls, the connection surface $S_E$ is at most 80% of the surface $S_G$, the surface $S_G$ being equal to the surface, measured on said wall of the cutout, defined by the geometric contour L of minimum length and enveloping the connection surface $S_E$.

**2.** A tread according to Claim 1, **characterised in that**, for at least one cutout (3, 4, 27) comprising at least two connecting elements (7), the surface $S_G$ defined by the geometric contour L of minimum length and enveloping the total connection surface $S_E$ on one main wall of the cutout is at least equal to 15% of the surface $S_T$ of the corresponding wall.

**3.** A tread according to one of Claims 1 or 2, **characterised in that** all the cutouts (3, 4, 27) comprising at least two connecting elements (7, 28) are entirely located beneath the running surface (2) of the tread when new and **in that**, furthermore, there are provided on the surface of the tread of the new tyre cutouts (29) the depth of which is greater than the smallest of the distances between the cutouts comprising at least two connecting elements and the running surface of the tread of the tyre when new.

**4.** A tread for a tyre according to any one of Claims 1 to 3, **characterised in that** it comprises a plurality of cutouts (3, 4, 14) provided with at least two connecting elements (7, 141), the centre axis of the traces of said cutouts (3, 4, 14) on the running surface of the tyre forming an angle of at most 45° with the transverse direction of the tread.

5. A tread for a tyre according to any one of Claims 1 to 3, **characterised in that** it comprises a plurality of cutouts (3, 4, 15) provided with at least two connecting elements (7, 151), the centre axis of the trace of each of said cutouts (3, 4, 15) on the running surface of said tread when new forming an angle of at least 75° and at most 90° with the transverse direction of the tread.

6. A tread for a tyre according to any one of Claims 1 to 3, **characterised in that** it comprises, on at least one of its edges (I, III) in the transverse direction, at least one cutout (15) provided with at least two connecting elements (151), said cutout (15) being oriented such that the centre axis of the trace thereof on the running surface forms an angle of at least 75° and at most 90° relative to the transverse direction of the tread, and **in that** the median part (II) of the tread comprises a plurality of cutouts (14) provided with at least two connecting elements (141), said cutouts (14) being oriented such that the centre axis of their traces on the running surface forms an angle of at most 0° and at most 45° relative to the transverse direction of the tread.

7. A tread for a tyre according to any one of Claims 1 to 6, **characterised in that** at least one of the cutouts (3, 4, 14, 15) located in the part of the tread affected by the loading of the tyre and provided with at least two connecting elements (7, 141, 151) has, on a surface parallel to the running surface and located radially to the inside of said surface, a trace, the orientation of the centre axis of which is different from the orientation of the centre axis of the trace of said cutout on the running surface of the new tread.

8. A tread for a tyre according to any one of Claims 1 to 7, **characterised in that** at least one of the cutouts (3, 4, 14, 15) provided with at least two connecting elements (7, 141, 151) forms an average angle of at most 20° with the direction perpendicular to the running surface (2) of the tread when new.

9. A tread of thickness E for a tyre, provided with a running surface (2), said tread (1) being provided with a plurality of cutouts (3, 4) oriented virtually in the same direction, each of said cutouts (3) being defined by the space defined principally between two opposing walls (5, 6), said walls being perpendicular to or oblique to the running surface (2), said cutouts having a depth h, measured as the distance in a radial direction between the points of the walls of said cutout which are closest to the running surface and the points of said walls which are farthest away from the running surface of the new tyre, h being at most equal to the thickness E of the tread, said cutouts being spaced apart by an average pitch equal to p, said tread being **characterised in that**:

the two main walls (5, 6) of the cutouts (3, 4) are connected by at least one rubber connecting element (7), the connecting element(s) (7) having a connection surface $S_E$ equal to the total intersection surface with each of the walls (5, 6);

- the connection ratio $T_P = S_E/S_T$, $S_E$ for each cutout is at least equal to 0.10 and at most equal to 0.80, $S_E$ being equal to the total intersection surface of the connecting element(s) (7) on each of the walls (5, 6), $S_T$ representing the total surface of each main wall of said cutout;

- the ratio p/h, between the pitch p and the depth h of the incisions, is at least 0.2 and at most 1.9, limits included.

10. A tread according to Claim 9, **characterised in that** the ratio p/h satisfies the following equation:

$$\frac{p}{h} \geq \frac{1}{5} \left( \frac{1}{T_P} \right)^{0.75}$$

11. A tread according to Claim 10, **characterised in that** the ratio p/h satisfies the following equation:

$$\frac{p}{h} \leq 2 \left( 1 - T_P \right)^{0.5}$$

12. A tread of thickness E for a tyre, provided with a running surface (2), said tread (1) being provided with a plurality of cutouts (3, 4) oriented virtually in the same direction, each of said cutouts (3) being defined by the space defined principally between two opposing walls (5, 6), said walls being perpendicular to or oblique to the running surface (2), and having a width e and a depth h, measured as the distance in a radial direction between the points of the walls of said cutout which are closest to the running surface and the points of said walls which are farthest away from the running surface of the new tyre, at most equal to the thickness E of the tread, said cutouts being spaced apart by an average pitch equal to p, said tread being **characterised in that**:

- the two main walls (5, 6) of a plurality of cutouts (3, 4) are connected by at least two rubber connecting elements (7), the connecting element(s) (7) having a connection surface $S_E$ equal to the total intersection surface with each of the walls (5, 6);

- and **in that** the ratio $T_P=S_E/S_T$, representing, on one of the main walls (5, 6) of said cutout, the connection ratio between the main walls of one and the same cutout, is at least equal to 0.10 and at most equal to the following value:

$$\frac{1}{\left(1+\frac{1}{3}\varepsilon\right)^{0.75}} \qquad where \ \varepsilon = (p - e)/h.$$

13. A tread for a tyre according to Claim 12, **characterised in that** at least 40% of the cutouts affected by the loading have at least one connecting element and **in that** the connection ratio $T_P$ of said cutouts is at least 0.25.

14. A tread for a tyre according to one of Claims 12 or 13, **characterised in that** the cutouts are incisions of a width at least equal to 0.1 mm and **in that** the ratio h/(p-e) is greater than 0.9.

15. A tread for a tyre according to any one of Claims 1 to 8 or 12 to 14, **characterised in that** for at least one cutout (3, 4, 14, 15), located in the part of the tread affected by the loading of the tyre and provided with at least two connecting elements (7, 141, 151), the ratio $T_P=S_P/S_T$ decreases virtually regularly with the wear of the tyre at least starting from a predetermined level of wear, $S_P$ representing, on one of the main walls of said cutout, the connection surface remaining after partial wear of the tread and $S_T$ representing the total surface of said wall corresponding to the same level of partial wear of the tread.

16. A tread for a tyre according to any one of Claims 1 to 15, **characterised in that** each connecting element (7, 141) between a first main wall and a second main wall of at least one cutout (3, 4, 14, 15) forms an angle other than 90° with the direction perpendicular to the surface of the new tread, so as to maintain a great length of ridge on the running surface, whatever the degree of wear of the tread.

17. A tread for a tyre according to any one of Claims 12 to 15, comprising a plurality of cutouts (3, 4, 14) provided with at least two connecting elements (7, 141, 151) connecting a first main wall to a second main wall of said cutouts, **characterised in that** for two adjoining cutouts of virtually identical orientation the radial and/or axial positions of the connecting elements of each of said cutouts are different, so as to be able to conserve a great length of active ridges on the running surface whatever the level of wear of the tread.

18. A tread of thickness E for a tyre, provided with a running surface, said tread being provided with a plurality of cutouts, each cutout being defined by the space defined principally between two opposing main walls, said walls being perpendicular to or oblique to the running surface, and having a depth h, measured as the distance in a radial direction between the points of the contour of said cutout which are farthest from the running surface of the new tyre, at most equal to the thickness E of the tread, **characterised in that**:

- the two main walls of at least one cutout located in the part of the tread affected by the loading on the ground of the tyre during travel are connected by a plurality of rubber connecting elements, said connecting elements having with at least one main wall (66) a total connection surface $S_E$ equal to the total of the intersection surfaces (76) of all the connecting elements with said wall, said connection surface $S_E$ on each of the walls being at least equal to 10% of the surface $S_T$ of said wall,

- each connecting element having with each of the walls (66) an intersection surface (76) at most equal to (ExE/20),

- and **in that** the surface $S_G$, defined by the geometric contour L of minimum perimeter and enveloping the total connection surface $S_E$, is at least equal to 70% of the surface $S_T$ of said wall.

19. A tread for a tyre according to Claim 18, **characterised in that** the intersection surfaces (76) of all the connecting elements are regularly distributed on the surfaces of the main walls of at least one cutout.

20. A tread for a tyre according to any one of Claims 1 to 19, **characterised in that** additional rubber elements are provided in at least one cutout to prevent the walls of said cutout from moving towards each other, these additional elements being connected to only a single one of the main walls of said cutout.

21. A tread for a tyre according to any one of Claims 1 to 20, **characterised in that** a plurality of cutouts (21, 25, 38) provided with connecting elements (311) are, at least in part, filled by at least one filling material which can be eliminated after vulcanisation of said strip.

**22.** A tread for a tyre according to Claim 21, **characterised in that** the filling material has a melting point lower than and close to the vulcanisation temperature of the tread.

**23.** A tread for a tyre according to Claim 21 or Claim 22, **characterised in that** the filling material is a material based essentially on fibres, such as paper pulp.

**24.** A tread for a tyre according to any one of Claims 21 to 23, **characterised in that** at least one cutout provided with at least one connecting element is filled with a material in the form of a woven fabric comprising warp and weft threads, said fabric having the property of resisting the vulcanisation of the tread and being able to be eliminated during the travel of the tyre, the spaces defined by the warp and weft threads corresponding to the passages of the connecting elements of said cutout.

**25.** A tread for a tyre according to any one of Claims 21 to 23, **characterised in that** a plurality of cutouts are, at least in part, filled with a material which is in the form of threads, said material being able to be eliminated after vulcanisation of the tread.

**26.** A tread for a tyre according to any one of Claims 1 to 25, **characterised in that**, for at least one cutout (38) provided with at least one connecting element (311), at least one main wall of said cutout is covered with at least one rubber mix (32, 33) other than the rubber mix (34) forming the tread, and having improved properties of abrasion resistance.

**27.** A tread for a tyre according to Claim 26, **characterised in that** the rubber mixes (32, 33) covering the facing walls of one and the same cutout are of different types.

**28.** A tread for a tyre according to any one of Claims 1 to 27, **characterised in that**, whatever the level of wear of said tread, the length of active ridge of the pattern in the imprint is at least 50% of the length of active ridge on the running surface of the tread when new.

**29.** A tread for a tyre according to any one of Claims 1 to 28, **characterised in that** at least 80% of the cutouts provided with connecting elements have a width of at least 0.1 mm and at most 2 mm.

**30.** A tread for a tyre according to any one of Claims 1 to 29, **characterised in that** the connecting element of a cutout which is closest to the running surface when new is arranged such that the distances between the ridge formed by one of the main walls of said cutout on the running surface when new and the points of the contour of the intersection surface of said element on said wall are between 40% and 60% of the depth h of the cutout.

**31.** A method for manufacturing a tread of thickness E for a tyre, said treadbeing provided with a plurality of cutouts provided with at least one connecting element between the main walls of each of said cutouts, comprising the following steps:

- production of inserts (16) in an appropriate material, said inserts having the general form of the cutouts desired in the tread, and of thickness equal to the width of said cutouts;

- removal of material in each insert (16) to obtain (an) orifice(s) (17) in a distribution selected beforehand, each orifice having a shape equivalent to the cross-section of a connecting element between two main walls of one and the same cutout;

- insertion of the inserts (16) into a non-vulcanised strip of rubber;

- moulding in a mould having the dimensions of the tread, for moulding and vulcanising said tread and forming the connecting elements in the orifice(s) (17) of the inserts (16);

- demoulding the tread after vulcanisation.

**32.** A method for manufacturing a tread according to Claim 31, **characterised in that**, in order to permit the insertion of the inserts (16) into a non-vulcanised rubber strip, cutouts of a depth less than or equal to the thickness of said non-vulcanised rubber strip are first produced.

**33.** A method for manufacturing a tread of thickness E for a tyre according to Claim 31 or Claim 32, **characterised in that** after demoulding the vulcanised tread a grinding operation is effected on the running surface over a sufficient depth to make a plurality of rubber ridges formed by the walls of the cutouts provided with at least one connecting element appear on the surface.

**34.** A method for manufacturing a tread of thickness E for a tyre according to one of Claims 31 to 33, **characterised in that** the tread obtained is in the form of a closed ring.

**35.** A method for manufacturing a tread of thickness E for a tyre according to any one of Claims 31 to 34, **characterised in that** the material forming the inserts is a material having a melting point less than and sufficiently close to the vulcanisation temperature of said tread to become fluid shortly before the end of the vulcanisation, taking into account the gradual increase in temperature of the rubber forming said strip, so as to permit the removal of said filling material after vulcanisation, for example by suction or by blowing.

**36.** A method for manufacturing a tread for a tyre according to any one of Claims 31 to 35, **characterised in that** the material forming the inserts is preferably a cellulosic material, such as paper pulp.

**37.** A method for manufacturing a tread for a tyre according to any ore of Claims 31 to 36, **characterised in that** the cutouts provided with at least one connecting element have a thickness of at least 0.4 mm.

**38.** A tyre comprising a tread defined according to any one of Claims 1 to 30.

**39.** A tyre according to Claim 38, **characterised in that** it is intended to be fitted on driving axles of vehicles of the heavy goods type.

**40.** A tread of thickness E for a tyre, provided with a running surface (2), said tread being provided with a plurality of cutouts, each cutout being defined by the space defined principally between two opposing walls (9), said walls being perpendicular to or oblique to the running surface (2), and having a depth h, measured as the maximum radial distance measured between the points of the walls of said cutout which are radially farthest away, at most equal to the thickness E of the tread, **characterised in that**:

- the two main walls (9) of at least one cutout located in the part of the tread affected by the loading on the ground of the tyre during travel are connected by a rubber connecting element (10), this connecting element (10) having with each of the walls (9) a connection surface $S_E$ equal to the total intersection surface, said surface $S_E$ on each of the walls being at least equal to 15% of the surface $S_T$ of said wall and at most equal to 40% of the same surface $S_T$,

- all the points of the outer contour of the surface of intersection of the connecting element (10) with one of the walls (9) are located at a distance from the running surface (2) which is strictly less than the depth of the cutout,

and **in that** the surface $S_G$, equal to the surface, measured on said wall of the cutout, defined by the geometric contour L of minimum length and enveloping the connection surface $S_E$, is at least equal to 90% of the wall surface $S_T$.

**41.** A tread for a tyre according to Claim 40, **characterised in that** for at least one cutout, located in the part of the tread affected by the loading of the tyre and provided with a connecting element (10), the ratio $T_P=S_P/S_T$ decreases virtually regularly with the wear of the tyre at least starting from a predetermined level of wear, $S_P$ representing, on one of the main walls of said cutout, the connection surface remaining after partial wear of the tread and $S_T$ representing the total surface of said wall corresponding to the same level of partial wear of the tread.

**42.** A tread for a tyre according to any one of Claims 40 or 41, **characterised in that**, for at least one cutout provided with at least one connecting element (10) between a first main wall and a second main wall of said cutout, each connecting element (10) forms an angle other than 90° with the direction perpendicular to the surface of the new tread, so as to maintain a great length of ridge on the running surface, whatever the degree of wear of the tread.

**43.** A tread for a tyre according to any one of Claims 40 to 42, comprising a plurality of cutouts provided with a connecting element (10) connecting a first main wall to a second main wall of said cutouts, **characterised in that** for two adjoining cutouts of virtually identical orientation the radial and/or axial positions of the connecting elements of each of said cutouts are different, so as to be able to conserve a great length of active ridges on the running surface whatever the level of wear of the tread.

**44.** A tread for a tyre according to any one of Claims 40 to 43, **characterised in that**, for at least one cutout provided with a connecting element (10), at least one main wall of said cutout is covered with at least one rubber mix other than the rubber mix forming the tread, and having improved properties of abrasion resistance.

**45.** A tread for a tyre according to any one of Claims 40 to 44, **characterised in that** the rubber mixes covering the facing walls of one and the same cutout are of different types.

**46.** A tread according to any one of Claims 40 to 45, **characterised in that** all the cutouts comprising at least one connecting element (10) are entirely located beneath the running surface (2) of the tread when new and **in that**, furthermore, there are provided on the surface of the tread of the new tyre cutouts the depth of which is greater than the smallest of the distances between the cutouts, comprising at least one connecting element, and the running surface of the tread of the tyre when new.

**Patentansprüche**

1. Lauffläche (1, 26) mit einer Dicke E, für einen Reifen, die mit einer Abrolloberfläche (2) versehen ist, wobei die genannte Lauffläche (1) mit einer Mehrzahl bzw. Vielzahl von Ausschnitten (3, 4, 27) versehen ist, jeder Ausschnitt (3) durch den Raum definiert ist, der besonders zwischen zwei einander gegenüberliegenden Wänden (5, 6) begrenzt ist, und die genannten Wände senkrecht zu der Ablaufoberfläche (2) oder schräg bezüglich dieser verlaufen sind sowie eine Tiefe h aufweisen, gemessen als der radiale Maximalabstand, der zwischen den radial am weitesten entfernten Punkten der Wände des genannten Ausschnitts gemessen wird und höchstens gleich ist der Dicke E der Lauffläche, **dadurch gekennzeichnet, daß**:

   - die beiden Hauptwände (5, 6) mindestens eines Ausschnitts (3), der in den Teil der Lauffläche gelegen ist, der durch die Quetschung am Boden beim abrollenden Reifen betroffen ist, durch mindestens ein Verbindungselement aus Gummi (7) verbunden sind, wobei das bzw. die Verbindungsslement(e) (7) mit jeder der Wände (5, 6) eine Verbindungsfläche $S_E$ aufweist bzw. aufweisen, die gleich der gesamten Schnittfläche ist, und die genannte Oberfläche $S_E$ auf jeder der Wände mindestens 10% der Oberfläche $S_T$ der genannten Wand beträgt,
   - alle Punkte der Außenkontur der Schnittfläche mindestens eines Verbindungselements (7) mit einer der Wände (5, 6) unter einem Abstand von der Ablaufoberfläche (2) gelegen sind, der streng kleiner ist als die Tiefe des Ausschnitts, und
   - daß auf jeder der Hauptwände die Verbindungsfläche $S_E$ mindestens 80% der Oberfläche $S_G$ beträgt, wobei die Oberfläche $S_G$ gleich der Oberfläche ist, die, auf der genannten Wand des Ausschnitts gemessen, durch die geometrische Kontur L der minimalen Länge begrenzt ist und die Verbindungsfläche $S_E$ einhüllt.

2. Lauffläche nach Anspruch 1, **dadurch gekennzeichnet, daß** für mindestens einen Ausschnitt (3, 4, 27), der mindestens zwei Verbindungselemente (7) aufweist, die Oberfläche $S_G$, die durch die geometrische Kontur **L** mit Mindestlänge und Einhüllende der gesamten Verbindungsfläche $S_E$ auf einer Hauptwand des Ausschnitts begrenzt ist, mindestens 15% der Oberfläche $S_T$ der entsprechenden Wand aufweist.

3. Lauffläche nach einem der Ansprüche 1 oder 2, **dadurch gekennzeichnet, daß** alle Ausschnitte (3, 4, 27), die mindestens zwei Verbindungselemente (7, 28) aufweisen, gänzlich unter der Abrolloberfläche (2) der Lauffläche in neuem Zustand gelegen sind, und daß außerdem an der Oberfläche der Lauffläche des neuen Reifens Ausschnitte (29) vorgesehen sind, deren Tiefe größer ist als der kleinste der Abstände, die die Ausschnitte, die mindestens zwei Verbindungselemente aufweisen, und die Abrolloberfläche der Lauffläche des Reifens in neuem Zustand trennen.

4. Lauffläche für einen Reifen nach irgendeinem der Ansprüche 1 bis 3, **dadurch gekennzeichnet, daß** sie eine Vielzahl von Ausschnitten (3, 4, 14) aufweist, die mit mindestens zwei Verbindungselementen (7, 141) versehen sind, wobei die Mittelachse der Spuren der genannten Ausschnitte (3, 4, 14) auf der Abrolloberfläche des Reifens mit der Querrichtung der Lauffläche einen Winkel bildet, der höchstens 45° beträgt.

5. Lauffläche für einen Reifen nach irgendeinem der Ansprüche 1 bis 3, **dadurch gekennzeichnet, daß** sie eine Vielzahl von Ausschnitten (3, 4, 15) aufweist, die mit mindestens zwei Verbindungselementen (7, 151) versehen sind, wobei die Mittelachse der Spuren eines jeden der genannten Ausschnitte (3, 4, 15) auf der Abrolloberfläche der genannten Lauffläche in neuem Zustand mit der Querrichtung der Lauffläche einen Winkel bildet, der mindestens 75° und höchstens 90° beträgt.

6. Lauffläche für einen Reifen nach irgendeinem der Ansprüche 1 bis 3, **dadurch gekennzeichnet, daß** sie auf mindestens einem ihrer Ränder (I, III), in Querrichtung gesehen, mindestens einen Ausschnitt (15) aufweist, der mit mindestens zwei Verbindungselementen (151) versehen ist, wobei der genannte Ausschnitt (15) derart ausgerichtet ist, daß die Mittelachse seiner Spur auf der Abrolloberfläche einen Winkel bezüglich der Querrichtung der Lauffläche bildet, der mindestens 75° und höchstens 90° beträgt, und daß der mittlere Teil (II) der Lauffläche eine Vielzahl von Ausschnitten (14) aufweist, die mit mindestens zwei Verbindungselementen (141) versehen sind, wobei die genannten Ausschnitte (14) derart ausgerichtet sind, daß die Mittelachse ihrer Spuren auf der Abrolloberfäche einen Winkel bezüglich der Querrichtung der Lauffläche bildet, der mindestens 0° und höchstens 45° beträgt.

7. Lauffläche für einen Reifen nach irgendeinem der Ansprüche 1 bis 6, **dadurch gekennzeichnet, daß** mindestens einer der Ausschnitte (3, 4, 14, 15), der in dem Teil der Lauffläche gelegen ist, der durch die Quetschung des Reifens betroffen ist, und der mit mindestens zwei Verbindungselementen (7, 141, 151) versehen ist, auf einer Oberfläche parallel zur Abrolloberfläche und radial auf der Innenseite der genannten Fläche gelegen ist, eine Spur aufweist, deren Ausrichtung der Mittelachse sich von der Ausrichtung der Mittelachse des genannten Ausschnitts auf der Abrolloberfläche der neuen Lauffläche unterscheidet.

8. Lauffläche für einen Reifen nach irgendeinem der Ansprüche 1 bis 7, **dadurch gekennzeichnet, daß** mindestens einer der Ausschnitte (3, 4, 14, 15), die mit mindestens zwei Verbindungselementen (7, 141, 151) versehen sind, mit der Richtung senkrecht zur Abrolloberfläche (2) der Lauffläche in neuem Zustand einen mittleren Winkel bildet, der höchstens 20° beträgt.

9. Lauffläche mit der Dicke E für einen Reifen, der mit einer Abrolloberfläche (2) versehen ist, wobei die genannte Lauffläche (1) mit einer Vielzahl von Ausschnitten (3, 4) versehen ist, die gewissermaßen in derselben Richtung ausgerichtet sind, wobei jeder der genannten Ausschnitte (3) durch den Raum definiert ist, der hauptsächlich zwischen zwei einander gegenüberliegenden Wänden (5, 6) definiert ist, die genannten Wände senkrecht zur Abrolloberfläche (2) oder bezüglich dieser schräg stehen, die genannten Ausschnitte eine Tiefe h aufweisen, gemessen als der Abstand in radialer Richtung zwischen den Punkten der Wände des genannten Ausschnitts, die der Abrolloberfläche nächstgelegen sind, und der Punkte der genannten Wände, die von der Abrolloberfläche des neuen Reifens am weitesten entfernt sind, h höchstens gleich der Dicke E der Lauffläche ist, die genannten Ausschnitte um eine Teilung beabstandet sind, die p beträgt, und die Lauffläche **dadurch gekennzeichnet ist, daß**:

- die beiden Hauptwände (5, 6) der Ausschnitte (3, 4) durch mindestens ein Verbindungselement (7) aus Gummi verbunden sind, wobei das bzw. die Verbindungselement(e) (7) mit jeder der Wände (5, 6) eine Verbindungsfläche $S_E$ aufweist bzw. aufweisen, die der gesamten Schnitt-Oberfläche gleich ist bzw. sind;
- das Maß der Verbindung $T_P = S_E/S_T$ für jeden Ausschnitt mindestens 0,10 und höchstens 0,80 beträgt, wobei $S_E$ die gesamte Schnitt-Oberfläche des bzw. der Verbindungselement(e) (7) auf jeder der Wände (5, 6) ist und $S_T$ die Gesamtoberfläche einer jeden Hauptwand des genannten Ausschnitts darstellt; und
- das Verhältnis p/h zwischen der Teilung p und der Tiefe h der Einschnitte mindestens 0,2 und höchstens 1,9 beträgt, die Grenzen mit eingeschlossen.

10. Lauffläche nach Anspruch 9, **dadurch gekennzeichnet, daß** das Verhältnis p/h die folgende Ungleichung nachvollzieht:

$$\frac{p}{h} \leq \frac{1}{5}\left(\frac{1}{Tp}\right)^{0,75}$$

11. Lauffläche nach Ansspruch 10, **dadurch gekennzeichnet, daß** das Verhältnis p/h die folgende Ungleichung nachvollzieht:

$$\frac{p}{h} \leq 2\,(1\text{-}Tp)^{0,5}$$

12. Lauffläche mit der Dicke E für einen Reifen, der mit einer Abrolloberfläche (2) versehen ist, wobei die genannte Lauffläche (1) mit einer Vielzahl von Ausschnitten (3, 4) versehen ist, die gewissermaßen in derselben Richtung ausgerichtet sind, wobei jeder der genannten Ausschnitte (3) durch den Raum definiert ist, der hauptsächlich zwischen zwei einander gegenüberliegenden Wänden (5, 6) definiert ist, die genannten Wände senkrecht zur Abrolloberfläche (2) oder bezüglich dieser schräg stehen, die genannten Ausschnitte eine Breite e eine Tiefe h aufweisen, gemessen als der Abstand in radialer Richtung zwischen den Punkten der Wände des genannten Ausschnitts, die der Abrolloberfläche nächstgelegen sind, und der Punkte der genannten Wände, die von der Abrolloberfläche des neuen Reifens am weitesten entfernt sind, höchstens gleich der Dicke E der Lauffläche ist, die genannten Ausschnitte um eine Teilung beabstandet sind, die p beträgt, und die Lauffläche **dadurch gekennzeichnet ist, daß**:

- die beiden Hauptwände (5, 6) einer Vielzahl von Ausschnitten (3, 4) durch mindestens zwei Verbindungselemente (7) aus Gummi verbunden sind, wobei die Verbindungselemente (7) mit jeder der Wände (5, 6) eine Verbindungsfläche $S_E$ aufweisen, die der gesamten Schnitt-Oberfläche gleich ist bzw. sind, und
- daß das Verhältnis $T_P = S_E/S_T$, das auf einer der Hauptwände (5, 6) des genannten Ausschnitts das Maß der Verbindung zwischen den Hauptwänden ein und desselben Ausschnitts darstellt, mindestens 0,10 und höchstens den folgenden Wert beträgt:

$$\frac{1}{\left(1+\frac{1}{3}\varepsilon\right)^{0,75}} \qquad \text{mit } \varepsilon = (p\text{-}e)/h$$

13. Lauffläche für einen Reifen nach Anspruch 12, **dadurch gekennzeichnet, daß** mindestens 40% der Ausschnitte, die durch die Quetschung betroffen sind, mindestens ein Verbindungselement aufweisen, und daß das Maß der Verbindung $T_P$ der genannten Ausschnitte mindestens 0,25 beträgt.

14. Lauffläche für einen Reifen nach einem der Ansprüche 12 oder 13, **dadurch gekennzeichnet, daß** die Ausschnitte Einschnitte mit einer Breite von mindestens 0,1 mm sind, und daß das Verhältnis h/(p-e) größer ist als 0,9.

15. Lauffläche für einen Reifen nach irgendeinem der Ansprüche 1 bis 8 oder 12 bis 14, **dadurch gekennzeichnet, daß** für mindestens einen Ausschnitt (3, 4, 14, 15), der in dem Teil der Lauffläche gelegen ist, der durch die Quetschung des Reifens betroffen ist, und der mindestens mit zwei Verbindungselementen (7, 141, 151) versehen ist, das Verhältnis $T_P=S_P/S_T$ in gewissermaßen regelmäßiger Weise mit der Abnutzung des Reifens, mindestens von einem vorbestimmten oder vorangekündigten Abnutzungsniveau ausgehend, abnimmt, wobei $S_P$ auf einer der Hauptwände des genannten Ausschnitts die nach teilweiser Abnutzung der Lauffläche verbleibende Verbindungsfläche und $S_T$ die Gesamtfläche der genannten Wand darstellt, die demselben, teilweisen Abnutzungsniveau der Lauffläche entspricht.

16. Lauffläche für einen Reifen nach irgendeinem Reifen der Ansprüche 1 bis 15, **dadurch gekennzeichnet, daß** jedes Verbindungselement (7, 141) zwischen einer ersten Hauptwand und einer zweiten Hauptwand mindestens eines Ausschnitts (3, 4, 14, 15) zur Richtung senkrecht zur Oberfläche der neuen Lauffläche einen Winkel bildet, der sich von 90° unterscheidet, um auf diese Weise eine große Kantenlänge auf der Abrolloberfläche zu erhalten, gleichgültig, wie der Abnutzungsgrad der Lauffläche sein mag.

17. Lauffläche für einen Reifen nach irgendeinem der Ansprüche 12 bis 15, mit einer Vielzahl von Ausschnitten (3, 4, 14), die mit mindestens zwei Verbindungselementen (7, 141, 151) versehen sind, die eine erste Hauptwand mit einer zweiten Hauptwand der genannten Ausschnitte verbinden, **dadurch gekennzeichnet, daß** für zwei benachbarte Ausschnitte mit einer gewissermaßen identischen Ausrichtung die radialen und/oder axialen Positionen der Verbindungselemente eines jeden der genannten Ausschnitte sich derart unterscheiden, daß sie eine große Länge aktiver Kanten auf der Abrolloberfläche bewahren können, wie das Abnutzungsniveau der Lauffläche auch sein mag.

18. Lauffläche mit einer Dicke E für einen Reifen, die mit einer Abrolloberfläche versehen ist, wobei die genannte Lauffläche mit einer Vielzahl von Ausschnitten versehen ist, jeder Ausschnitt durch den Raum definiert ist, der prinzipiell zwischen zwei einander gegenüberliegenden Hauptwänden begrenzt ist, die genannten Wände senkrecht zur Abrolloberfläche oder bezüglich dieser schräg verlaufen, und mit einer Tiefe h, gemessen als der Abstand in radialer Richtung der Punkte der Kontur des genannten Ausschnitts, die von der Abrolloberfläche des neuen Reifens am weitesten entfernt sind, und die höchstens die Dikke E der Lauffläche beträgt, **dadurch gekennzeichnet, daß**

- die beiden Hauptwände mindestens eines Ausschnitts, der im Teil der Lauffläche sitzt, der durch die Quetschung des Reifens auf dem Boden beim Abrollen betroffen ist, durch eine Vielzahl von Verbindungselementen aus Gummi verbunden sind, wobei die genannten Verbindungselemente mit mindestens einer Hauptwand (66) eine Gesamt-Verbindungsfläche $S_E$ aufweisen, die gleich der Summe der Schnittoberfächen (76) aller Elemente der Verbindung mit der genannten Wand ist, und wobei die genante Verbindungsoberfläche $S_E$ auf jeder der Wände mindestens gleich 10% der Oberfläche $S_T$ der genannten Wand ist,
- jedes Verbindungselement mit jeder der Wände (66) eine Schnittoberfläche (76) aufweist, die höchstens (ExE/20) beträgt, und
- daß die Oberfläche $S_G$, die durch die geometrische Kontur L des kleinsten Umfangs begrenzt ist und die gesamte Verbindungsoberfläche $S_E$ einhüllt, mindestens 70% der Oberfläche $S_T$ der genannten Wand beträgt.

19. Lauffläche für einen Reifen nach Anspruch 18, **dadurch gekennzeichnet, daß** die Schnittoberflächen (76) aller Verbindungselemente regelmäßig über die Oberflächen der Hauptwände mindestens eines Ausschnitts verteilt sind.

20. Lauffläche für einen Reifen nach irgendeinem der Ansprüche 1 bis 19, **dadurch gekennzeichnet, daß** ergänzende Elemente aus Gummi in mindestens einem Ausschnitt vorgesehen sind, um die Annäherung der Wände des genannten Ausschnitts zu verhindern, wobei diese ergänzenden Elemente nur mit einer der Hauptwände des genannten Ausschnitts verbunden sind.

21. Lauffläche für einen Reifen nach irgendeinem der Ansprüche 1 bis 20, **dadurch gekennzeichnet, daß** eine Vielzahl von Ausschnitten (21, 25, 38), die mit Verbindungselementen (311) versehen sind, mindestens teilweise mit einem Füllmaterial gefüllt sind, das sich nach der Vulkanisation der genannten Lauffläche freisetzen kann.

22. Lauffläche für einen Reifen nach Anspruch 21, **da-**

**durch gekennzeichnet, daß** das Füllmaterial einen Schmelzpunkt aufweist, der der Vulkanisationstemperatur der Lauffläche benachbart, aber niedriger ist.

23. Lauffläche für einen Reifen nach Anspruch 21 oder Anspruch 22, **dadurch gekennzeichnet, daß** das Füllmaterial ein im wesentlichen auf Fasern begründetes Material ist, zum Beispiel Papiermasse.

24. Lauffläche nach irgendeinem der Ansprüche 21 bis 23, **dadurch gekennzeichnet, daß** mindestens ein Ausschnitt, der mit mindestens einem Verbindungselement versehen ist, mit einem Material gefüllt ist, das sich in Form eines Gewebes darbietet, das Kettfäden und Schußfäden aufweist, wobei das genannte Gewebe die Eigenschaft hat, der Vulkanisation der Lauffläche zu widerstehen und sich während des Abrollens des Reifens zu verflüchtigen, und wobei die durch die Kettfäden und die Schußfäden begrenzten Räume den Verläufen der Verbindungselemente des genannten Ausschnitts entsprechen.

25. Lauffläche nach irgendeinem der Ansprüche 21 bis 23, **dadurch gekennzeichnet, daß** eine Vielzahl von Ausschnitten mindestens teilweise mit einem Material gefüllt ist, das sich in Form eines Drahtes oder von Drähten darbietet, wobei sich das genannte Material nach der Vulkanisation der Lauffläche verflüchtigen kann oder entfernt wird.

26. Lauffläche nach irgendeinem der Ansprüche 1 bis 25, **dadurch gekennzeichnet, daß** für mindestens einen Ausschnitt (38), der mit mindestens einem Verbindungselement (311) versehen ist, mindestens eine Hauptwand des genannten Ausschnitts mit mindestens einer Gummimischung (32, 33) abgedeckt ist, die sich von der Gummimischung (34) unterscheidet, die die Lauffläche zusammensetzt, und verbesserte Eigenschaften der Abriebbeständigkeit aufweist.

27. Lauffläche für einen Reifen nach Anspruch 26, **dadurch gekennzeichnet, daß** die Gummimischungen (32, 33), die die gegenüberliegenden Wände ein und desselben Ausschnitts abdecken, unterschiedlicher Natur sind.

28. Lauffläche nach irgendeinem der Ansprüche 1 bis 27, **dadurch gekennzeichnet, daß**, gleichgültig, wie das Abnutzungsniveau der genannten Lauffläche auch sein mag, die aktive Kantenlänge des Profils im Abdruck mindestens 50% der aktiven Kantenlänge auf der Abrolloberfläche der Lauffläche in neuem Zustand beträgt.

29. Lauffläche nach irgendeinem der Ansprüche 1 bis 28, **dadurch gekennzeichnet, daß** mindestens 80% der Ausschnitte, die mit Verbindungselementen versehen sind, eine Breite haben, die mindestens 0,1 mm und höchstens 2 mm beträgt.

30. Lauffläche nach irgendeinem der Ansprüche 1 bis 29, **dadurch gekennzeichnet, daß** das Verbindungselement eines Ausschnitts, das der Abrolloberfläche in neuem Zustand nächstgelegen ist, derart angeordnet ist, daß die Abstände, die die Kante, die von einer der Hauptwände des genannten Ausschnitts auf der Abrolloberfläche in neuem Zustand gebildet ist, und die Punkte der Kontur der Schnittoberfläche des genannten Elements auf der genannten Wand trennen, zwischen 40% und 60% der Tiefe h des Ausschnitts liegen.

31. Verfahren zur Herstellung einer Lauffläche mit der Dicke E für einen Reifen, wobei die genannte Lauffläche mit einer Vielzahl von Ausschnitten versehen ist, die mit mindestens einem Verbindungselement zwischen den Hauptwänden eines jeden der genannten Ausschnitte versehen sind, mit den folgenden Schritten:

   - Herstellung von Einlagen (16) aus einem geeigneten Material, wobei die Einlagen die allgemeine Form der gewünschten Ausschnitte in der Lauffläche aufweisen und von einer Dicke sind, die gleich ist der Breite der genannten Ausschnitte;
   - Entnahme von Material in jeder Einlage (16), um eine Öffnung bzw. Öffnungen (17) in einer gewünschten oder vorab festgelegten Unterteilung zu erhalten, wobei jede Öffnung eine Form aufweist, die äquivalent ist zum Querschnitt eines Elements zur Verbindung zwischen den beiden Hauptwänden ein und desselben Ausschnitts;
   - Einführen der Einlagen (16) in ein nichtvulkanisiertes Gummiband bzw. eine nichtvulkanisierte Lauffläche aus Gummi;
   - Abformen in einer Form mit den Abmessungen der Lauffläche, um die genannte Lauffläche abzuformen und zu vulkanisieren, sowie um die Verbindungselemente in der Öffnung bzw. den Öffnungen (17) der Einlagen (16) zu bilden; und
   - Ausformen der Lauffläche nach der Vulkanisation.

32. Verfahren zur Herstellung einer Lauffläche nach Anspruch 31, **dadurch gekennzeichnet, daß**, um das Einführen der Einlagen (16) in eine Lauffläche aus nichtvulkanisiertem Gummi zu gestatten, man vorab Ausschnitte mit einer Tiefe herstellt, die gleich oder kleiner ist als die Dicke der genannten Lauffläche aus nichtvulkanisiertem Gummi.

**33.** Verfahren zur Herstellung einer Lauffläche mit einer Dicke E für einen Reifen nach Anspruch 31 oder Anspruch 32, **dadurch gekennzeichnet, daß** man nach dem Ausformen der vulkanisierten Lauffläche zu einem Schleifvorgang über eine Tiefe übergeht, die ausreicht, um an der Oberfläche eine Vielzahl von Kanten aus Gummi erscheinen zu lassen, die von den Wänden der Ausschnitte gebildet sind, die mit mindestens einem Verbindungselement versehen sind.

**34.** Verfahren zur Herstellung einer Lauffläche mit einer Dicke E für einen Reifen nach einem der Ansprüche 31 bis 33, **dadurch gekennzeichnet, daß** die erhaltene Lauffläche die Form eines geschlossenen Ringes aufweist.

**35.** Verfahren zur Herstellung einer Lauffläche mit einer Dicke E für einen Reifen nach irgendeinem der Ansprüche 31 bis 34, **dadurch gekennzeichnet, daß** das Material, das die Einlagen zusammensetzt, ein Material ist, dessen Schmelzpunkt niedriger liegt als die Vulkanisationstemperatur der Lauffläche, aber hinlänglich nahe an dieser Temperatur, um sich auf diese Weise kurze Zeit vor dem Ende der Vulkanisation zu verflüssigen, wobei man dem fortlaufenden Temperaturanstieg des Gummi Rechnung trägt, der die genannte Lauffläche zusammensetzt, um auf diese Weise die Entfernung des genannten Füllmaterials nach der Vulkanisation zum Beispiel durch Saugen oder Blasen zu gestatten.

**36.** Verfahren zur Herstellung einer Lauffläche für einen Reifen nach einem der Ansprüche 31 bis 35, **dadurch gekennzeichnet, daß** das Material, das die Einlagen bildet, bevorzugt ein zelluloseartiges Material ist, wie Papiermasse.

**37.** Verfahren zur Herstellung einer Lauffläche für einen Reifen nach einem der Ansprüche 31 bis 36, **dadurch gekennzeichnet, daß** die mit mindestens einem Verbindungselement versehenen Ausschnitte eine Dicke von mindestens 0,4 mm aufweisen.

**38.** Reifen mit einer Lauffläche, die nach irgendeinem der Ansprüche 1 bis 30 definiert ist.

**39.** Reifen nach Anspruch 38, **dadurch gekennzeichnet, daß** er dazu bestimmt ist, Antriebsachsen von Schwerlastfahrzeugen auszustatten.

**40.** Lauffläche mit der Dicke E für einen Reifen, die mit einer Abrolloberfläche (2) versehen ist, wobei die genannte Lauffläche mit einer Vielzahl von Ausschnitten versehen ist, jeder Ausschnitt durch den Raum definiert wird, der hauptsächlich zwischen zwei einander gegenüberliegenden Wänden (9) begrenzt ist, und die genannten Wände zur Abrolloberfläche (2) senkrecht oder schräg stehen sowie eine Tiefe h haben, die als der radiale Maximalabstand gemessen wird, der zwischen den radial am weitesten entfernten Punkten des genannten Ausschnitts gemessen ist und höchstens gleich der Dicke E der Lauffläche ist, **dadurch gekennzeichnet, daß**:

- die beiden Hauptwände (9) mindestens eines Ausschnitts, der in dem Teil der Lauffläche gelegen ist, der durch die Zusammenquetschung des Reifens am Boden beim Abrollen betroffen ist, durch ein Verbindungselement (10) aus Gummi verbunden sind, wobei dieses Verbindungselement (10) zusammen mit jeder der Wände (9) eine Verbindungsfläche $S_E$ darbietet, die gleich ist der gesamten Schnittoberfläche, und wobei die genannte Oberfläche $S_E$ auf jeder der Wände mindestens 15% der Oberfläche $S_T$ der genannten Wand und höchstens 40% derselben Oberfläche $S_T$ ist,
- alle Punkte der äußeren Kontur der Schnittoberfläche des Verbindungselements (10) mit der einen der Wände (9) unter einem Abstand von der Abrollfläche (2) gelegen sind, der streng kleiner ist als die Tiefe des Ausschnitts, und
- daß die Oberfläche $S_G$, die gleich ist der Oberfläche, die auf der genannten Wand des Ausschnitts gemessen ist, und die durch die geometrische Kontur L der Mindestlänge begrenzt ist sowie die Verbindungsfläche $S_E$ einhüllt, mindestens 90% der Oberfläche der Wand $S_T$ beträgt.

**41.** Lauffläche für einen Reifen nach Anspruch 40, **dadurch gekennzeichnet, daß** für mindestens einen Ausschnitt, der in dem Teil der Lauffläche gelegen ist, der durch das Zusammenquetschen des Reifens betroffen ist, und der mit einem Verbindungselement (10) versehen ist, sich das Verhältnis $T_P = S_P/S_T$ in gewissermaßen regelmäßiger Weise mit der Abnutzung des Reifens verringert, mindestens von einem vorbestimmten oder vorhergesagten Niveau der Abnutzung ausgehend, wobei $S_P$ auf der einen der Hauptwände des genannten Ausschnitts die Verbindungsoberfläche nach der teilweisen Abnutzung der Lauffläche darstellt und $S_T$ die Gesamtfläche der genannten Wand entsprechend demselben Niveau der teilweisen Abnutzung der Lauffläche darstellt.

**42.** Lauffläche für einen Reifen nach irgendeinem der Ansprüche 40 oder 41, **dadurch gekennzeichnet, daß** für mindestens einen Ausschnitt, der mit mindestens einem Verbindungselement (10) zwischen einer ersten Hauptwand und einer zweiten Hauptwand des genannten Ausschnitts versehen ist, jedes Verbindungselement (10) zur Richtung senkrecht zur Oberfläche der neuen Lauffläche einen Winkel bildet, der sich von 90° unterscheidet, um auf diese Weise eine große Kantenlänge auf der Abrolloberfläche aufrechtzuerhalten, wie der Abnutzungsgrad der Lauffläche auch sein mag.

43. Lauffläche für einen Reifen nach irgendeinem der Ansprüche 40 bis 42, mit einer Vielzahl von Ausschnitten, die mit einem Verbindungselement (10) versehen sind, das eine erste Hauptwand mit einer zweiten Hauptwand der genannten Ausschnitte verbindet, **dadurch gekennzeichnet, daß** für zwei benachbarte Ausschnitte mit einer gewissermaßen identischen Ausrichtung die radialen und/oder axialen Positionen der Verbindungselemente eines jeden der genannten Ausschnitte derart verschieden sind, daß man eine große Länge aktiver Kanten an der Ablaufoberfläche bewahren kann, wie das Abnutzungsniveau der Lauffläche auch sein mag.

44. Lauffläche für einen Reifen nach irgendeinem der Ansprüche 40 bis 43, **dadurch gekennzeichnet, daß** für mindestens einen Ausschnitt, der mit einem Verbindungselement (10) versehen ist, mindestens eine Hauptwand des genannten Ausschnitts mit mindestens einer Gummischung abgedeckt ist, die sich von der Gummimischung unterscheidet, die die Lauffläche zusammensetzt, und verbesserte Abriebeigenschaften aufweist.

45. Lauffläche für einen Reifen nach irgendeinem der Ansprüche 40 bis 44, **dadurch gekennzeichnet, daß** die Gummimischungen, die die gegenüberliegenden Wände ein und desselben Ausschnitts abdecken, unterschiedlicher Natur sind.

46. Lauffläche für einen Reifen nach irgendeinem der Ansprüche 40 bis 45, **dadurch gekennzeichnet, daß** alle Ausschnitte, die mindestens ein Verbindungselement (10) aufweisen, gänzlich unter der Abrolloberfläche (2) der Lauffläche in neuem Zustand liegen, und daß außerdem an der Oberfläche der Lauffläche des neuen Reifens Ausschnitte vorgesehen sind, deren Tiefe größer ist als der kleinste der Abstände, die die Ausschnitte, die mindestens ein Verbindungselement aufweisen, von der Abrolloberfläche der Lauffläche des Reifens in neuem Zustand trennen.

FIG. 1

FIG. 2

FIG. 4

FIG. 3

FIG.5

FIG. 6

FIG.7

FIG.8

FIG.9A

FIG.9B

FIG.9

FIG. 10

11 A

11 B

FIG. 11